(19) Europäisches Patentamt
European Patent Office
Office européen des brevets

(11) EP 1 919 021 B1

(12) **EUROPEAN PATENT SPECIFICATION**

(45) Date of publication and mention
of the grant of the patent:
**07.12.2011 Bulletin 2011/49**

(51) Int Cl.:
**H01M 8/12** (2006.01)   **H01M 8/02** (2006.01)

(21) Application number: **07254108.9**

(22) Date of filing: **17.10.2007**

(54) **Thin plate member for unit cell of solid oxide fuel cell**

Dünnes Plattenelement für die Einheitszelle einer Festoxidbrennstoffzelle

Élément de plaque mince pour pile d'unité de pile à combustible d'oxyde solide

(84) Designated Contracting States:
**DE FR GB**

(30) Priority: **24.10.2006 JP 2006288975**
**22.05.2007 JP 2007135651**

(43) Date of publication of application:
**07.05.2008 Bulletin 2008/19**

(73) Proprietor: **NGK Insulators, Ltd.**
**Nagoya-City, Aichi Pref. 467-8530 (JP)**

(72) Inventors:
• **Makoto Ohmori**
**c/o Legal Affairs and Intellectual Property Dept.**
**NGK Insulators, Ltd.**
**Aichi-ken, 467-8530 (JP)**

• **Natsumi Shimogawa**
**c/o Legal Affairs and Intellectual Property Dept.**
**NGK Insulators, Ltd.**
**Aichi-ken, 467-8530 (JP)**
• **Tsutomu Nanataki**
**c/o Legal Affairs and Intellectual Property Dept.**
**NGK Insulators, Ltd.**
**Aichi-ken, 467-8530 (JP)**

(74) Representative: **Brasnett, Adrian Hugh**
**Mewburn Ellis LLP**
**33 Gutter Lane**
**London**
**EC2V 8AS (GB)**

(56) References cited:
WO-A-01/45186          WO-A-2004/006365
WO-A-2004/097959      WO-A-2004/100284
JP-A- 6 068 885        JP-A- 2006 139 966
US-A- 5 122 425        US-A1- 2007 072 035

**Description**

BACKGROUND OF THE INVENTION

Field of the Invention:

The present invention relates to a ceramic thin plate member for a solid oxide fuel cell (hereinafter referred to as "SOFC").

Description of the Related Art:

There has conventionally been known a thin plate member for a unit cell of an SOFC including a solid electrolyte layer, a fuel electrode layer that is formed on one surface of the solid electrolyte layer and accepts a supply of a fuel gas (e.g., hydrogen, etc.) from this one surface, and an air electrode layer that is formed on the other surface of the solid electrolyte layer and accepts a supply of an oxide gas (e.g., air, etc.) from this other surface, wherein those layers are laminated and sintered (e.g., see Japanese Unexamined Patent Application No. 2006-139966).

In the thin plate member described above, the thermal expansion coefficient of the fuel electrode layer made of Ni - YSZ cermet, etc is generally greater than the thermal expansion coefficient of the solid electrolyte layer made of zirconia, and the thermal expansion coefficient of the air electrode layer made of LSM (lanthanum strontium manganate), etc is generally equal to the thermal expansion coefficient of the solid electrolyte layer. Therefore, the sintered thin plate member is easy to be deformed by internal stress (thermal stress) caused by the difference in the thermal expansion coefficient among layers. Further, the thin plate member might be deformed by the internal stress (thermal stress) caused by the difference in the contraction amount among the layers upon sintering.

Meanwhile, an attempt has been made to greatly reduce the size of the thin plate member in order to downsize the SOFC or reduce the internal electrical resistance. When the thin plate member is formed to be extremely thin, a support section (a layer supporting the thin plate member) in the thin plate member becomes thin, so that the deformation of the thin plate member becomes noticeable.

In this case, various problems arise. For example, a fuel flow path or air flow path formed at the portion opposite to one surface of the fuel electrode layer or to the other surface of the air electrode layer is extremely narrow. Therefore, a problem that the deformed thin plate member closes these flow paths might arise. Even if the thin plate member is deformed to such a degree not closing the flow paths, there arises a problem that the pressure loss produced when fluid such as air or fuel flows through the flow paths increases due to the deformation of the thin plate member.

In order to reduce the deformation (warp) of the thin plate member, it is considered that a layer (warp correction layer) for reducing the warp of the thin plate member caused by the difference in the thermal expansion coefficient is formed on one surface of the fuel electrode layer or on the other surface of the air electrode layer.

However, in this case, the warp correction layer is interposed between the fuel gas flow path and the fuel electrode layer or between the air flow path and the air electrode layer, whereby the circulation of the fuel gas from the fuel gas flow path to the one surface of the fuel electrode layer or the circulation of the air from the air flow path to the other surface of the air electrode layer can be hindered. As a result, gas permeability in the unit cell is deteriorated, thereby entailing a new problem of reducing power generation efficiency.

WO2004/100284 illustrates in its Fig. 7 a fuel cell in which a solid electrolyte layer is carried on a porous insulating support. Separated anodes are in a layer on the electrolyte layer. Cathodes are on the side surface of the electrolyte layer. Interconnects join each anode to the next cathode along the electrolyte layer. In another cell (Fig. 21) in this document, there is a layered structure of a cathode (LSM-YS2), an electrolyte (YSZ), an anode (Ni-YSZ) and a substrate (PSZ).

WO2004/006365 illustrates an anode-supported fuel cell, having a porous stress-compensating layer and an electrolyte. Between these two there is an anode support of porous NiO-YSZ and an anode. A porous nickel layer fills holes in the stress-compensating layer, to provide electrical connection to the anode.

SUMMARY OF THE INVENTION

An object of the present invention is to provide an extremely thin plate member for a unit cell of an SOFC that can prevent a warp and can secure sufficient gas permeability.

The invention provides a thin plate member for a solid oxide fuel cell, as set out in claim 1.

One form of the thin plate member for a solid oxide fuel cell according to the present invention comprises the solid electrolyte layer; the first electrode layer (fuel electrode layer) that is formed on one surface of the solid electrolyte layer and has a thermal expansion coefficient greater than that of the solid electrolyte layer; the second electrode layer (air electrode layer) that is formed on the other surface of the solid electrolyte layer; and the porous layer (corresponding to the above-mentioned warp correction layer) that is made of porous insulating member, formed on one surface of the first electrode layer and having a thermal expansion coefficient smaller than that of the first electrode layer, wherein these layers are laminated and sintered.

By virtue of this configuration, the deformation direction of the thin plate member based upon the internal stress caused by the difference in the thermal expansion coefficient between the solid electrolyte layer and the fuel electrode layer and the deformation direction of the thin plate member based upon the internal stress caused by the difference in the thermal expansion coefficient between the fuel electrode layer and the porous layer can be made reverse to each other. As a result, the warp of the thin plate member caused by the internal stress based upon the difference in the thermal expansion coefficient between the layers can be prevented. In general, an oxide such as zircon can be employed as the material for the porous member made of the insulating member. In this case, the oxide porous layer is formed on the fuel electrode layer. Therefore, the porous layer can be stably adhered onto the fuel electrode layer through oxygen, with the result that the effect of preventing the warp can stably be demonstrated.

Additionally, the porous layer laminated on one surface (front surface) of the fuel electrode layer is made of (insulating) porous member. Therefore, even if the porous layer is interposed between the fuel gas flow path and the fuel electrode layer, the flow path of the fuel gas from the fuel gas flow path to the one surface of the fuel electrode layer can sufficiently be secured, with the result that the circulation of the fuel gas to one surface of the fuel electrode layer is difficult to be hindered. Consequently, the permeability of the fuel gas in the unit cell can be secured, thereby being capable of preventing the reduction in the power generation efficiency of the SOFC.

In this case, it is preferable that the ratio of the area occupied by the porous layer with respect to the whole thin plate member in plan view (in plane view, when viewed from the top) is not less than 50 %. Accordingly, the porous layer (specifically, the warp correction layer) can uniformly and sufficiently provide the effect of reducing the warp on the thin plate member.

In the thin plate member according to the present invention, the thickness of the solid electrolyte layer, the thickness of the first electrode layer, and the thickness of the second electrode layer can respectively be set to, for example, 15 to 50 $\mu$m, 3 to 50 $\mu$m, and 3 to 50 $\mu$m, and the difference in the thermal expansion coefficient between the porous layer and the first electrode layer can be set to 4 to 9.5 ppm/K. In this case, it is found that, when the thickness of the porous layer is 10 to 30 $\mu$m, and the porosity of the porous layer is 20 to 70 %, the effect of reducing the warp can sufficiently be demonstrated, while securing the permeability of the gas.

This is based upon the fact that the gas permeability tends to enhance as the porosity of the porous layer is great or as the thickness of the porous layer is small, and further, as the porosity of the porous layer is great, the thickness of the porous layer necessary for sufficiently demonstrating the warp reducing effect tends to increase.

In the thin plate member according to the present invention, the thickness of the solid electrolyte layer, the thickness of the first electrode layer, and the thickness of the second electrode layer can respectively be set to, for example, 1 to 10 $\mu$m, 50 to 250 $\mu$m, and 3 to 50 $\mu$m, and the difference in the thermal expansion coefficient between the porous layer and the first electrode layer can be set to 4 to 9.5 ppm/K. In this case, it is found that, when the thickness of the porous layer is 10 to 50 $\mu$m, and the porosity of the porous layer is 20 to 70 %, the effect of reducing the warp can sufficiently be demonstrated, while securing the permeability of the gas. This is based upon the reason same as that described above.

It is preferable that, in the thin plate member according to the present invention, when there is a portion on one surface of the first electrode layer where the porous layer is not formed, an electrode terminal for taking electrons produced by the power generation reaction of the thin plate member to the outside is formed on this portion. Specifically, the terminal is directly formed on one surface of the solid electrolyte layer.

In this case, it is preferable that in any regions in plan view that are a part of the whole thin plate member and have the area of 50 % of the whole thin plate member in plan view (preferably, the region having the shape similar to the whole thin plate member), the ratio of the area occupied by the terminal with respect to the region in plan view is not less than 3 % and not more than 50 %.

This configuration can be achieved by arranging and forming the plural terminals in such a manner that the area of the whole thin plate member in plan view is not less than 25 mm$^2$ and not more than 40000 mm$^2$, four or more terminals are formed so as to be apart from each other, and each of the minimum spaces between each terminal and the other terminals is not less than 0.5 mm and not more than 10 mm.

By virtue of this configuration, the existence region in plan view of the terminal in the area of the whole thin plate member is extremely uniformly arranged. Therefore, the porous layer is formed on the whole (or not less than 95 %) of the remaining portion, where the terminal is not formed, at one surface of the first electrode layer, whereby the existence region of the porous layer in the area of the whole thin plate member can uniformly be arranged. As a result, the aforesaid effect of reducing the warp on the thin plate member by the porous layer can uniformly and sufficiently be demonstrated.

In addition, since the existence region of the terminal in the area of the whole thin plate member is greatly uniformly arranged, the sum of the outer peripheries of the region (hereinafter referred to as "terminal contact region") that is in contact with the (root) of the terminal at one surface of the first electrode layer can be increased. The fuel gas going into the first electrode layer from the region excluding the terminal from the whole thin plate member in plan view, has a characteristic (hereinafter referred to as "diffusion phenomenon) of moving into the region where the terminal is present in the first electrode layer in plan view. This means that, as the sum of the outer peripheries of the terminal contact area increases, the diffusion phenomenon becomes more noticeable. Accordingly, since the fuel gas can more uniformly reach one surface of the solid electrolyte layer according to the above-mentioned configuration, the power generation efficiency of the SOFC can be further enhanced (in case where the total area of the terminal in plan view is constant (i.e., the gas permeability is constant)).

The requirement that "the ratio of the area occupied by the terminal is not less than 3 % and not more than 50 %" can be determined considering the tendency in which the gas permeability increases as the ratio of the area of the terminal decreases, and the tendency in which the internal resistance of the terminal decreases as the ratio of the area of the terminal increases.

Explained above is that the warp can be prevented and the gas permeability can sufficiently be secured by forming the porous layer, which is made of a porous insulating member having a thermal expansion coefficient smaller than that of the first electrode layer, on one surface of the first electrode layer. Similarly, the same operation and effect can be obtained even by forming the porous layer, which is made of a porous insulating member having a thermal expansion coefficient greater than that of the second electrode layer, on the other surface of the second electrode layer.

In this case too, it is preferable that the ratio of the area occupied by the porous layer with respect to the whole thin plate member in plan view is not less than 50 % by the reason same as that in the case of forming the porous layer on one surface of the first electrode layer.

When the thickness of the solid electrolyte layer is 15 to 50 $\mu$m, the thickness of the first electrode layer is 3 to 50 $\mu$m, and the thickness of the second electrode layer is 3 to 50 $\mu$m, and the difference in the thermal expansion coefficient between the porous layer and the second electrode layer is 1.7 to 3.5 ppm/K, it is preferable that the thickness of the porous layer is 20 to 40 $\mu$m, and the porosity of the porous layer is 20 to 70 %.

Similarly, when the thickness of the solid electrolyte layer is 1 to 10 $\mu$m, the thickness of the first electrode layer is 50 to 250 $\mu$m, and the thickness of the second electrode layer is 3 to 50 $\mu$m, and the difference in the thermal expansion coefficient between the porous layer and the second electrode layer is 1.7 to 3.5 ppm/K, it is preferable that the thickness of the porous layer is 20 to 50 $\mu$m, and the porosity of the porous layer is 20 to 70%.

Additionally, it is preferable that an electrode terminal for taking electrons, which are produced by the power generation reaction of the thin plate member, is formed on the other surface of the second electrode layer where the porous layer is not formed.

In this case, it is preferable that in any regions that are a part of the whole thin plate member and have the area of 50 % of the whole thin plate member in plan view (preferably, the region having the shape similar to the whole thin plate member), the ratio of the area occupied by the terminal with respect to the regions in plan view is not less than 3 % and not more than 50%.

This configuration can be achieved by arranging and forming the plural terminals in such a manner that the area of the whole thin plate member in plan view is not less than 25 mm$^2$ and not more than 40000 mm$^2$, four or more terminals are formed so as to be apart from each other, and each of the minimum spaces between each terminal and the other terminals is not less than 0.5 mm and not more than 10 mm.

BRIEF DESCRIPTION OF THE DRAWINGS

Various other objects, features and many of the attendant advantages of the present invention will be readily appreciated as the same becomes better understood by reference to the following detailed description of the preferred embodiment when considered in connection with the accompanying drawings, in which:

FIG. 1 is a cutout perspective view of an SOFC using a thin plate member according to a first embodiment of the present invention;
FIG. 2 is a partially enlarged view of the SOFC shown in FIG. 1;
FIG. 3 is a view for explaining a circulation of a fuel and air in the SOFC shown in FIG. 1;
FIG. 4 is a perspective view of the thin plate member shown in FIG. 1;
FIG. 5 is a partial sectional view of the thin plate member, shown in FIG. 4, cut along a plane that includes a line 4 - 4 and perpendicular to the plane of the thin plate member;
FIG. 6 is a table showing a result of an experiment that is carried out for confirming the optimum combination of a thickness and porosity of a porous layer in the SOFC using the thin plate member according to the first embodiment of the present invention, wherein the thin plate member is supported by the electrolyte layer;
FIG. 7 is a table showing a result of an experiment that is carried out for confirming the optimum combination of a thickness and porosity of a porous layer in the SOFC using the thin plate member according to the first embodiment of the present invention, wherein the thin plate member is supported by the fuel electrode layer;

FIG. 8 is a partial sectional view of the thin plate member according to a modification of the first embodiment of the present invention;

FIG. 9 is a partial sectional view of the thin plate member according to another modification of the first embodiment of the present invention;

FIG. 10 is a partial sectional view of the thin plate member according to another modification of the first embodiment of the present invention;

FIG. 11 is a perspective view of the thin plate member according to another modification of the first embodiment of the present invention;

FIG. 12 is a perspective view of the thin plate member according to another modification of the first embodiment of the present invention;

FIG. 13 is a perspective view of the thin plate member according to another modification of the first embodiment of the present invention;

FIG. 14 is a perspective view of the thin plate member according to another modification of the first embodiment of the present invention;

FIG. 15 is a partial sectional view of the thin plate member, shown in FIG. 14, cut along a plane that includes a line 14 - 14 and perpendicular to the plane of the thin plate member;

FIG. 16 is a perspective view of a thin plate member according to a second embodiment of the present invention;

FIG. 17 is a partial sectional view of the thin plate member, shown in FIG. 16, cut along a plane that includes a line 12 - 12 and perpendicular to the plane of the thin plate member;

FIG. 18 is a table showing a result of an experiment that is carried out for confirming the optimum combination of a thickness and porosity of a porous layer in the SOFC using the thin plate member according to the second embodiment of the present invention, wherein the thin plate member is supported by the electrolyte layer;

FIG. 19 is a table showing a result of an experiment that is carried out for confirming the optimum combination of a thickness and porosity of a porous layer in the SOFC using the thin plate member according to the second embodiment of the present invention, wherein the thin plate member is supported by the fuel electrode layer;

FIG. 20 is a partial sectional view of the thin plate member according to a modification of the second embodiment of the present invention;

FIG. 21 is a partial sectional view of the thin plate member according to another modification of the second embodiment of the present invention;

FIG. 22 is a partial sectional view of the thin plate member according to another modification of the second embodiment of the present invention;

FIG. 23 is a perspective view of the thin plate member according to another modification of the second embodiment of the present invention;

FIG. 24 is a perspective view of the thin plate member according to another modification of the second embodiment of the present invention;

FIG. 25 is a perspective view of the thin plate member according to another modification of the second embodiment of the present invention;

FIG. 26 is a perspective view of the thin plate member according to another modification of the second embodiment of the present invention; and

FIG. 27 is a partial sectional view of the thin plate member, shown in FIG. 26, cut along a plane that includes a line 26 - 26 and perpendicular to the plane of the thin plate member.

## DESCRIPTION OF THE PREFERRED EMBODIMENT

A thin plate member according to each embodiment of the present invention will be explained with reference to drawings.

## FIRST EMBODIMENT

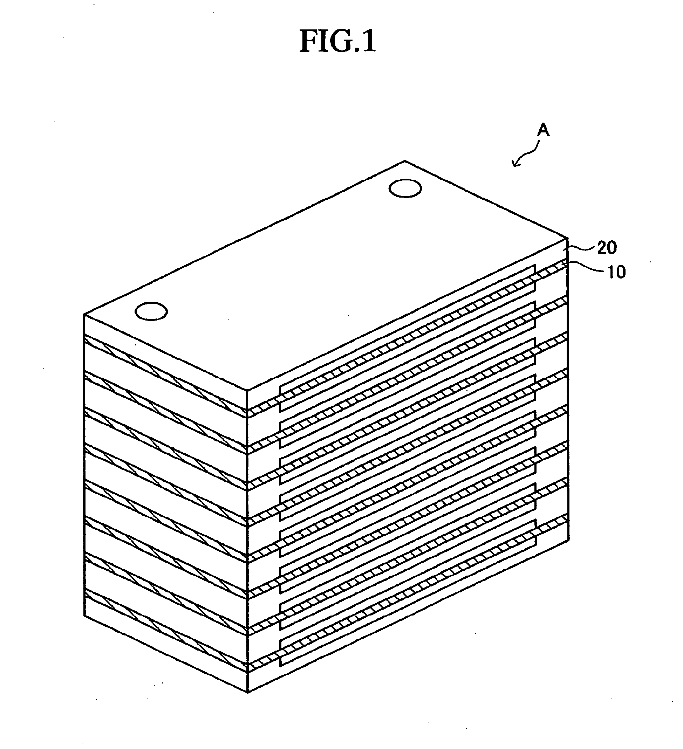

FIG. 1 is a cutaway sectional view of a solid oxide fuel cell (SOFC, hereinafter simply referred to as "fuel cell") A that uses a thin plate member 10 according to a first embodiment of the present invention. The fuel cell A is formed by alternately laminating the thin plate member 10 and a support member 20. Specifically, the fuel cell A has a stack structure. The thin plate member 10 is also referred to as a "unit cell" of the fuel cell A. The support member 20 is also referred to as an "interconnector".

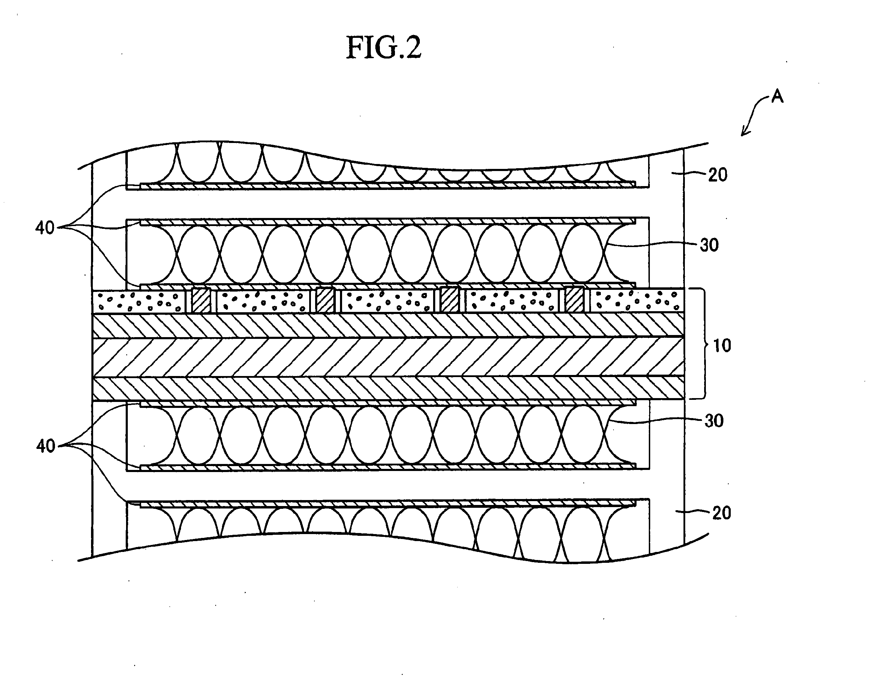

As shown in FIG. 2 that is a partially enlarged view of FIG. 1, current-collecting meshes (wools) 30 made of metal are interposed and filled between each space formed between the adjacent thin plate member 10 and the (partitioning plate portion) of the support member 20. The upper and lower ends of each mesh 30 are in contact with current-collecting sintered films 40 made of porous metal formed on the upper and lower surfaces of each thin plate member 10 and the upper and lower surfaces of the partitioning plate portion of the support member 20. Accordingly, electrons produced by a power generation reaction of each thin plate member 10 can be taken out to the outside through the sintered film 40, mesh 30, and support member 20.

Although the meshes 30 are filled in the entire area of each space in FIG. 2, the meshes 30 may be filled in a part of each space. Similarly, although the sintered film 40 is formed on the entire area on the upper and lower surfaces of the partitioning plate portion of each support member 20 in FIG. 2, the sintered film 40 may be formed only at a part of the upper and lower surfaces of each partitioning plate portion.

In the fuel cell A, fuel is supplied to a fuel flow path Pf formed between the upper surface of the thin plate member 10 (at the side of the later-described fuel electrode layer 12) and the lower surface (of the partitioning plate portion) of the support member 20, and air is supplied to an air flow path Pa formed between the lower surface of the thin plate member 10 (at the side of the later-described air electrode layer 13) and the upper surface (of the partitioning plate portion) of the support member 20, whereby power generation on the basis of the chemical equations (1) and (2) shown below is performed.

$$(1/2) \cdot O_2 + 2e^- \rightarrow O^{2-} \qquad \text{(at air electrode layer 13)} \qquad (1)$$

$$H_2 + O^{2-} \rightarrow H_2O + 2e^- \qquad \text{(at fuel electrode layer 12)} \qquad (2)$$

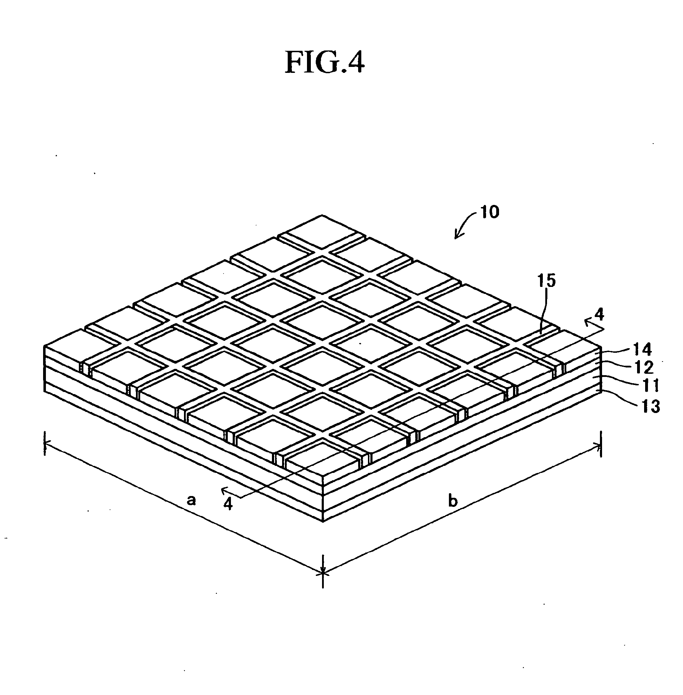

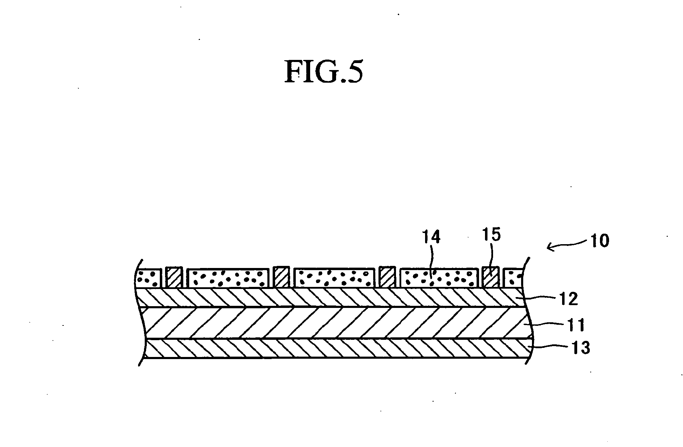

The structure of the thin plate member 10 according to the first embodiment will be explained in detail with reference to FIGS. 4 and 5. FIG. 4 is a perspective view of the thin plate member 10, and FIG. 5 is a partial sectional view of the thin plate member 10 cut along the plane that includes 4 - 4 line parallel to the side having the length b and is perpendicular to the plane of the thin plate member 10.

The thin plate member 10 is a sintered plate member having a square planar shape. The lengths a, b of one side are not less than 5 mm and not more than 200 mm. The thickness of the thin plate member 10 is not less than 24 $\mu$m and not more than 360 $\mu$m. Specifically, the thin plate member 10 is extremely thin and is easy to be warped.

The thin plate member 10 includes an electrolyte layer (solid electrolyte layer) 11, a fuel electrode layer 12 laminated and formed on the upper surface (one surface) of the electrolyte layer 11, and an air electrode layer 13 laminated and formed on the lower surface (other surface) of the electrolyte layer 11. The fuel electrode layer 12 is a layer to which a fuel gas in the fuel flow path Pf is supplied from its upper surface, while the air electrode layer 13 is a layer to which air in the air flow path Pa is supplied from its lower surface.

A porous layer 14 and a terminal 15 are laminated and formed on the upper surface (one surface) of the fuel electrode layer 12. The terminal 15 is formed so as to be in a lattice in plan view (see FIG. 4) and so as to have a side sectional face formed into a rectangle (see FIG. 5). The porous layer 14 is formed all over (except for the vicinity of the side face of the terminal 15) the remaining portion of the upper surface of the fuel electrode layer 12 where the terminal 15 is not formed.

The height of the terminal 15 is slightly greater than the thickness of the porous layer 14. The sintered film 40 (see FIG. 2) is formed on the upper surface of the porous layer 14 and the upper surface of the terminal 15. Therefore, the terminal 15 can take out electrons, which are produced by the power generation reaction of the thin plate member 10, to the outside through the sintered film 40, mesh 30, and support member 20. On the other hand, the porous layer 14 is formed so as to prevent the warp on the thin plate member Pf as described later.

In this embodiment, the electrolyte layer 11 is a dense sintered body of YSZ (yttria-stabilized zirconia) serving as a ceramic layer. The fuel electrode layer is a sintered body made of Ni - YSZ serving as a porous electrode layer. The air electrode layer 13 is a sintered body made of LSM (La(Sr)Mn03: lanthanum strontium manganate) - YSZ serving as a porous electrode layer. The average thermal expansion coefficients of the electrolyte layer 11, fuel electrode layer 12, and air electrode layer 13 from room temperature to 1000 °C are approximately 10.8 ppm/K, 12.5 ppm/K, and 11 (10.8) ppm/K. Specifically, the thermal expansion coefficient of the fuel electrode layer 12 is greater than the thermal expansion coefficient of the electrolyte layer 11, and the thermal expansion coefficient of the air electrode layer 13 is (generally) equal to the thermal expansion coefficient of the electrolyte layer 11.

The porous layer 14 is a porous and insulating sintered body made of, for example, zircon. The porosity (the ratio of the volume of pores with respect to the whole) of the porous layer 14 is 10 to 80 %. Preferably, it is 20 to 70 % (30 to 60 %). The electrical resistance of the porous layer 14 at 800 °C is $10^4$ to $10^5$ $\Omega \cdot$ m. The average thermal expansion coefficient of the porous layer 14 from room temperature to 1000 °C is approximately 4.2 ppm/K. Specifically, the thermal expansion coefficient of the porous layer 14 is smaller than the thermal expansion coefficient of the fuel electrode layer 12.

In the thin plate member 10 having the aforesaid structure and size and used as a unit cell of the fuel cell A, the thermal expansion coefficient of the fuel electrode layer 12 is greater than the thermal expansion coefficient of the electrolyte layer 11, and the thermal expansion coefficient of the porous layer 14 is smaller than the thermal expansion coefficient of the fuel electrode layer 12 (and the electrolyte layer 11). Accordingly, the deformation direction of the thin plate member 10 based upon the internal stress caused by the difference in the thermal expansion coefficient between the electrolyte layer 11 and the fuel electrode layer 12 and the deformation direction of the thin plate member 10 based upon the internal stress caused by the difference in the thermal expansion coefficient between the fuel electrode layer 12 and the porous layer 14 can be made reverse to each other. As a result, the warp of the whole thin plate member 10 caused by the internal stress based upon the difference in the thermal expansion coefficient between the layers can be reduced.

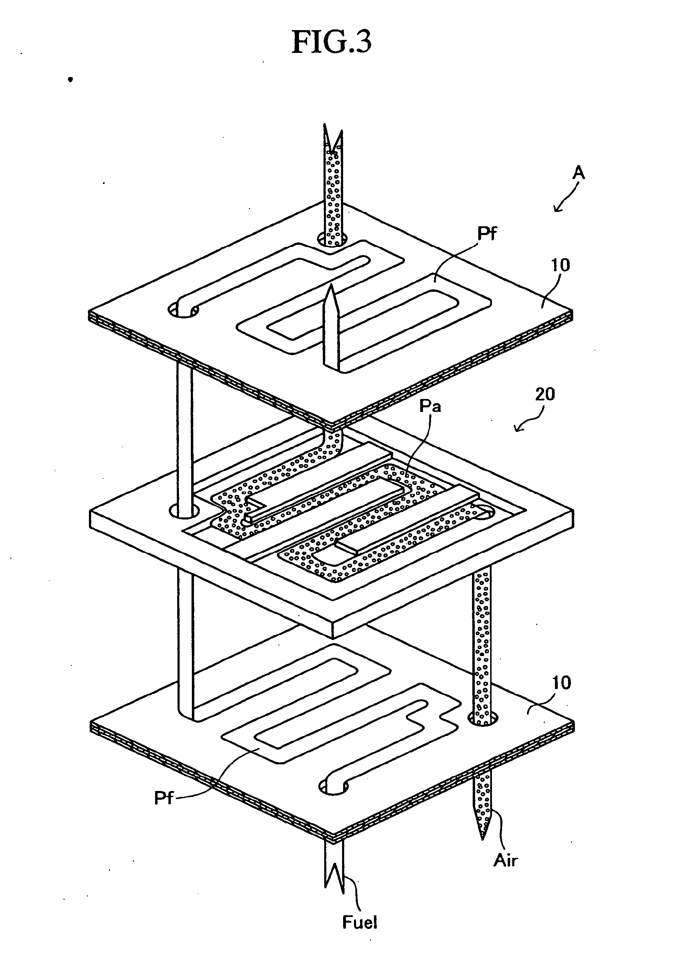

The porous layer 14 interposed between the fuel gas flow path Pf (see FIG. 3) and the fuel electrode layer 12 is made of a porous member. Therefore, the flow path of the fuel gas from the fuel gas flow path Pf to the upper surface of the fuel electrode layer 12 can sufficiently be secured. Accordingly, the circulation of the fuel gas to the upper surface of the fuel electrode layer 12 is difficult to be hindered. Consequently, the permeability of the fuel gas in the thin plate member 10 (unit cell) can be secured, thereby preventing the reduction in the power generation efficiency of the fuel cell A.

In the above-mentioned structure, the ratio of the area occupied by the porous layer 14 with respect to the whole thin plate member 10 is not less than 50 % in plan view. Therefore, the above-mentioned effect of reducing the warp on the thin plate member 10 provided by the porous layer 14 can uniformly and sufficiently be demonstrated.

Additionally, the existence region of the terminal 15 in the area of the whole thin plate member 10 is extremely uniformly arranged in plan view. Specifically, in any square regions in plan view that are a part of the whole thin plate member 10 and have the area of 50 % of the whole area of the thin plate member 10 in plan view, the ratio of the area occupied by the terminal 15 with respect to the square region in plan view is not less than 3 % and not more than 50 %.

The porous layer 14 is formed generally all over the remaining portion (on the portion not less than 95 %) of the upper surface of the fuel electrode layer 12 where the terminal 15 is not formed. Specifically, the existence region of the porous layer 14 is extremely uniformly arranged even in the region of the whole thin plate member 10. As a result, the effect of reducing the warp on the thin plate member 10 provided by the porous layer 14 can extremely uniformly and sufficiently be demonstrated.

Since the existence region of the terminal 15 is extremely uniformly arranged in the region of the whole thin plate member 10, the sum of the outer peripheries of the region (aforesaid terminal contact region) that are in contact with the (root) of the terminal 15 on the upper surface of the fuel electrode layer 12 is great. The fuel gas entering the inside of the fuel electrode layer 12 from the region, excluding the terminal 15, of the thin plate member 10 in plan view has a characteristic of moving into the region where the terminal 15 is present at the inside of the fuel electrode layer 12 in plan view (the above-mentioned diffusion phenomenon). This means that, as the sum of the outer peripheries of the terminal contact region increases, the diffusion phenomenon becomes more noticeable. Therefore, the fuel gas can more uniformly reach the upper surface of the electrolyte layer 11 according to the present embodiment. As a result, the power generation efficiency of the fuel cell A can be further enhanced in case where the total area of the terminal 15 is constant in plan view (e.g., in case where the gas permeability is constant).

The requirement that "the ratio of the area occupied by the terminal 15 is not less than 3 % and not more than 50 %" is determined considering the tendency in which the gas permeability increases as the ratio of the area of the terminal 15 decreases, and the tendency in which the internal resistance of the thin plate member 10 decreases as the ratio of the area of the terminal 15 increases.

Subsequently explained is the optimum combination of the thicknesses of the electrolyte layer 11, fuel electrode layer 12 and air electrode layer 13, the difference in the thermal expansion coefficient between the porous layer 14 and the fuel electrode layer 12, and the thickness and porosity of the porous layer 14 in the case where the securing of the gas permeability and the demonstration of the warp reducing effect are considered.

Considered firstly is the case in which the thickness of the electrolyte layer 11, the thickness of the fuel electrode layer 12 and the thickness of the air electrode layer 13 are 15 to 50 $\mu$m, 3 to 50 $\mu$m, and 3 to 50 $\mu$m, respectively in the thin plate member 10 (i.e., the thin plate member 10 is supported by the electrolyte layer 11), and the difference in the thermal expansion coefficient between the fuel electrode layer 12 and the porous layer 14 is 4 to 9.5 ppm.K.

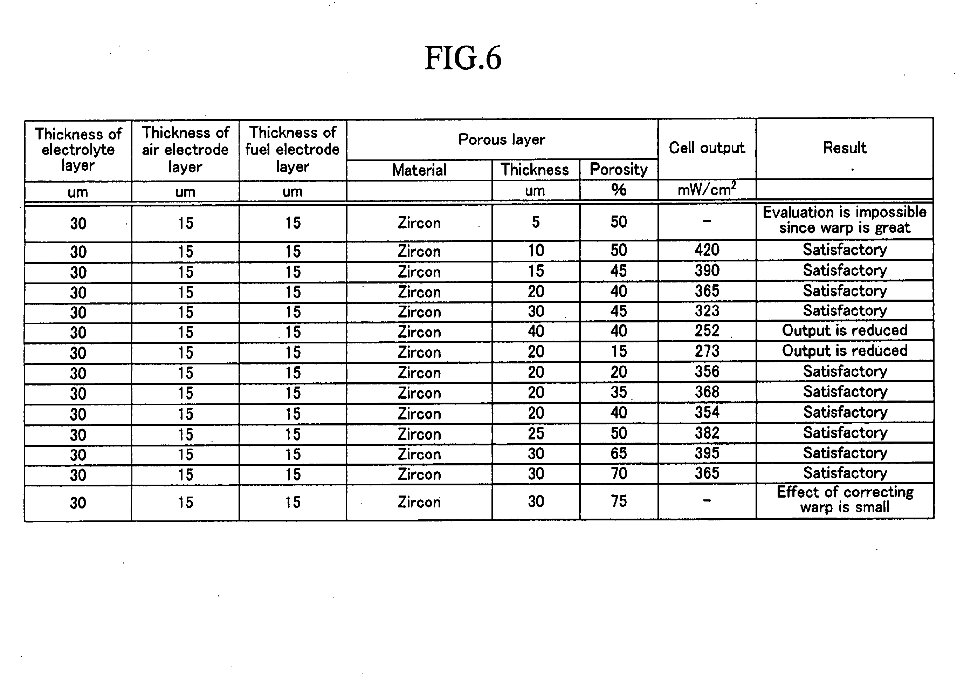

FIG. 6 shows a result of the experiment in which samples (cells) of the thin plate member 10 having the electrolyte layer 11 with a thickness of 30 $\mu$m, fuel electrode layer 12 with a thickness of 15 $\mu$m, air electrode layer 13 with a thickness of 15 $\mu$m, and porous layer 14 made of zircon are manufactured as one example of the thin plate member 10, wherein the combinations of the thickness and the porosity of the porous layer 14 are different in each sample, and the power generation characteristic and the warp state after the sintering are evaluated for every sample. The output density (mW/cm$^2$) of the cell output at the rated output (0.7 V) at 800 °C is employed as the power generation characteristic. The smaller output density means the reduced gas permeability (permeability of the fuel gas).

As understood from FIG. 6, when the thickness of the porous layer 14 is less than 10 $\mu$m, the warp is great, so that the evaluation is impossible. It is considered that this is because the rigidity of the porous layer 14 is insufficient, and hence, the warp reducing effect is insufficient, since the thickness of the porous layer 14 is too small. On the other hand, when the thickness of the porous layer 14 is not less than 10 $\mu$m, the warp reducing effect can sufficiently be demonstrated. It is to be noted that, when the thickness of the porous layer 14 is not less than 40 $\mu$m, the output density becomes small. It is considered that this is because the gas permeability is reduced, since the thickness of the porous layer 14 is too great.

When the porosity of the porous layer 14 is not more than 15 %, the output density becomes small. It is considered that this is because the gas permeability is reduced since the porosity of the porous layer 14 is too small. On the other hand, when the porosity of the porous layer 14 is not less than 20 %, sufficient output density of not less than 300 (mW/cm$^2$) can be obtained. It is to be noted that, when the porosity of the porous layer 14 is not less than 75 %, the warp becomes great. It is considered that this is because the rigidity of the porous layer 14 is insufficient, and hence, the warp reducing effect is insufficient, since the porosity of the porous layer 14 is too great.

From the above, it is preferable in this case that the thickness of the porous layer 14 is 10 to 30 $\mu$m, and the porosity thereof is 20 to 70 %. By virtue of this structure, it is found that the warp reducing effect can sufficiently be demonstrated while securing the permeability of the gas (fuel gas). It is estimated that this is based upon the fact that, as the porosity of the porous layer 14 increases or as the thickness of the porous layer 14 is decreased, there is a tendency of enhancing the gas permeability, and as the porosity of the porous layer 14 increases, there is a tendency of increasing the thickness of the porous layer 14 necessary for sufficiently demonstrating the warp reducing effect.

Subsequently considered is the case in which the thickness of the electrolyte layer 11, the thickness of the fuel electrode layer 12 and the thickness of the air electrode layer 13 are 1 to 10 $\mu$m, 50 to 250 $\mu$m, and 3 to 50 $\mu$m, respectively in the thin plate member 10 (i.e., the thin plate member 10 is supported by the fuel electrode layer 12), and the difference in the thermal expansion coefficient between the fuel electrode layer 12 and the porous layer 14 is 4 to 9.5 ppm.K.

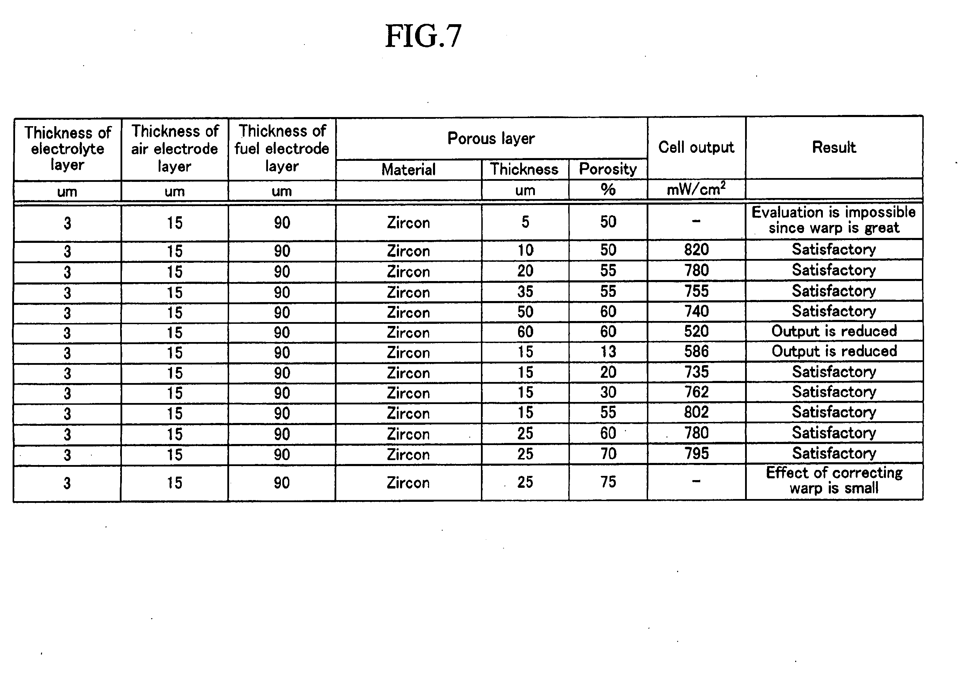

FIG. 7 shows a result of the experiment in which samples (cells) of the thin plate member 10 having the electrolyte layer 11 with a thickness of 3 $\mu$m, fuel electrode layer 12 with a thickness of 90 $\mu$m, air electrode layer 13 with a thickness of 15 $\mu$m, and porous layer 14 made of zircon are manufactured as one example of the thin plate member 10, wherein the combinations of the thickness and the porosity of the porous layer 14 are different in each sample, and the power generation characteristic and the warp state after the sintering are evaluated for every sample. The output density (mW/cm$^2$) of the cell output at the rated output (0.7 V) at 800 °C is employed as the power generation characteristic, like the case of FIG. 6.

As understood from FIG. 7, when the thickness of the porous layer 14 is less than 10 $\mu$m, the warp is great, so that the evaluation is impossible. It is considered that this is because the rigidity of the porous layer 14 is insufficient, and hence, the warp reducing effect is insufficient, since the thickness of the porous layer 14 is too small. On the other hand, when the thickness of the porous layer 14 is not less than 10 $\mu$m, the warp reducing effect can sufficiently be demonstrated. It is to be noted that, when the thickness of the porous layer 14 is not less than 60 $\mu$m, the output density becomes small. It is considered that this is because the gas permeability is reduced, since the thickness of the porous layer 14 is too great.

When the porosity of the porous layer 14 is not more than 15 %, the output density becomes small. It is considered that this is because the gas permeability is reduced since the porosity of the porous layer 14 is too small. On the other hand, when the porosity of the porous layer 14 is not less than 20 %, sufficient output density of not less than 700 (mW/cm$^2$) can be obtained. It is to be noted that, when the porosity of the porous layer 14 is not less than 75 %, the warp becomes great. It is considered that this is because the rigidity of the porous layer 14 is insufficient, and hence, the warp reducing effect is insufficient, since the porosity of the porous layer 14 is too great.

From the above, it is preferable in this case that the thickness of the porous layer 14 is 10 to 50 $\mu$m, and the porosity thereof is 20 to 70 %. By virtue of this structure, it is found that the warp reducing effect can sufficiently be demonstrated while securing the permeability of the gas (fuel gas).

According to the first embodiment, the porous layer 14, which is made of porous insulating member and has a thermal expansion coefficient smaller that the thermal expansion coefficient of the fuel electrode layer 12, is laminated and formed on the upper surface of the fuel electrode layer 12, whereby the warp on the thin plate member 10 is prevented and the gas permeability can sufficiently be secured.

In addition, the porous layer 14 and the terminal 15 are extremely uniformly arranged in plan view. As a result, the effect of reducing the warp on the thin plate member 10 provided by the porous layer 14 can extremely uniformly and sufficiently be demonstrated.

One example of a method of manufacturing the thin plate member 10 shown in FIGS. 4 and 5 will be explained. Firstly, a square sheet (a layer serving as the fuel electrode layer 12) is formed on the upper surface of a square ceramic sheet (a layer serving as the electrolyte layer 11) by a printing method, and a pattern (a layer serving as the porous layer 14) having a shape corresponding to the porous layer 14 is formed thereon by a printing method. The resultant is sintered at 1400 °C for one hour.

Then, a square sheet (a layer serving as the air electrode layer 13) is formed on the lower surface of the sintered body by a printing method, and the resultant is sintered at 1200 °C for one hour. Next, a pattern (a layer serving as the terminal 15) having a shape corresponding to the terminal 15 is formed on the upper surface of the sintered body, and the resultant is sintered at 1000 °C for one hour. Thus, the thin plate member 10 shown in FIGS. 4 and 5 is manufactured.

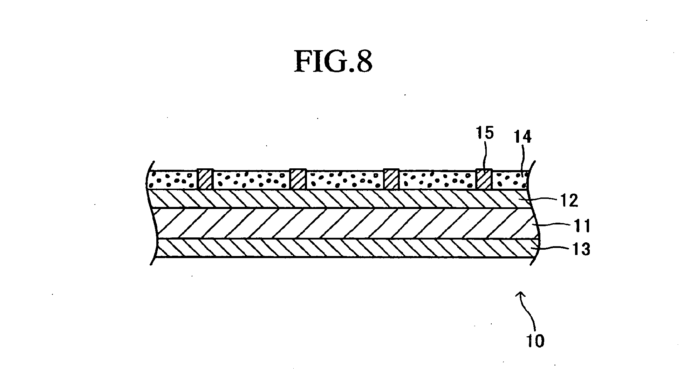

The present invention is not limited to the first embodiment, and various modifications are possible within the scope of the present invention. For example, a slight gap is formed between the side face of the porous layer 14 and the side face of the terminal 15 at the side sectional surface as shown in FIG. 5 according to the first embodiment. However, the side faces of the porous layer 14 and the terminal 15 are brought into contact with each other at the side sectional surface as shown in FIG. 8.

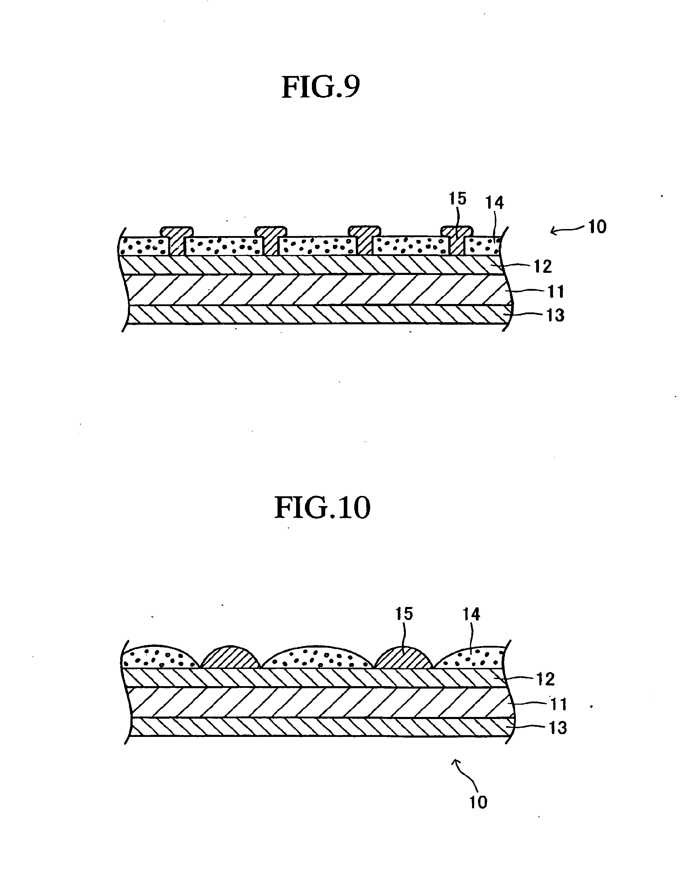

Although the side sectional surface of the terminal 15 is formed into a rectangle in the first embodiment, the side sectional surface of the terminal 15 may be formed into a T-like shape as shown in FIG. 9. Further, as shown in FIG. 10, the upper surfaces of the porous layer 14 and the terminal 15 may be formed into a convex shape at the side sectional surface.

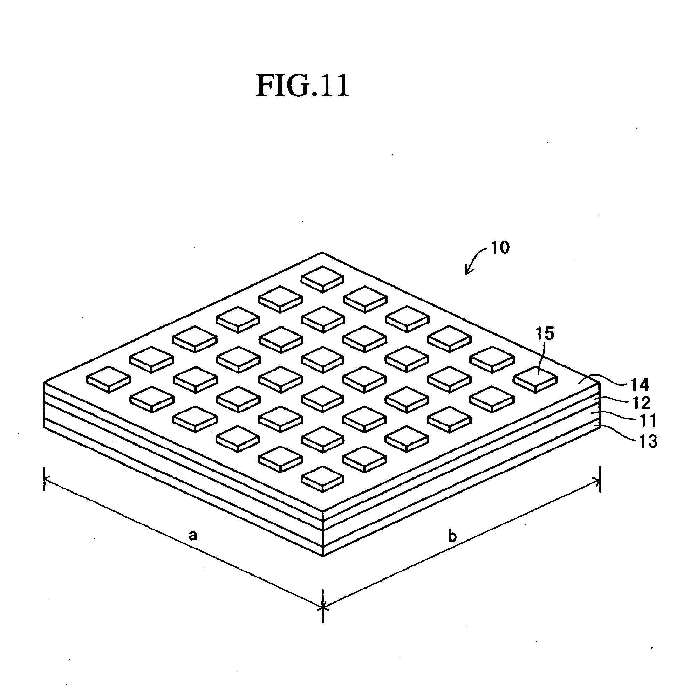

Although the terminal 15 is formed in a lattice (see FIG. 4), in plan view, in the first embodiment, the terminal 15 is formed into plural islands, in plan view, aligned in the longitudinal direction and widthwise direction so as to be apart from each other as shown in FIG. 11. In this case, the plural terminals 15 are arranged and formed in such a manner that the area of the whole thin plate member 10 in plan view is not less than 25 mm$^2$ and not more than 40000 mm$^2$, four or more terminals 15 are formed so as to be apart from each other, and each of the minimum spaces in plan view between each terminal 15 and the other terminals is not less than 0.5 mm and not more than 10 mm.

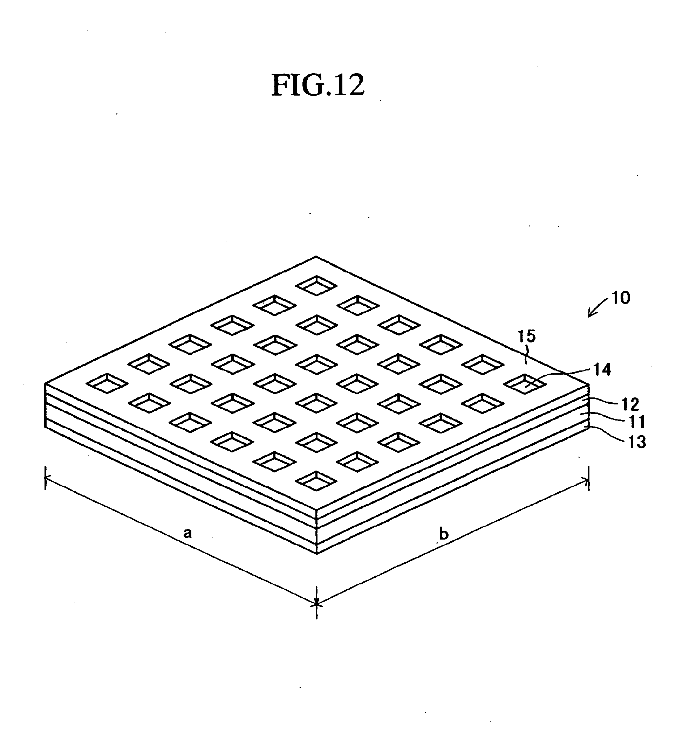

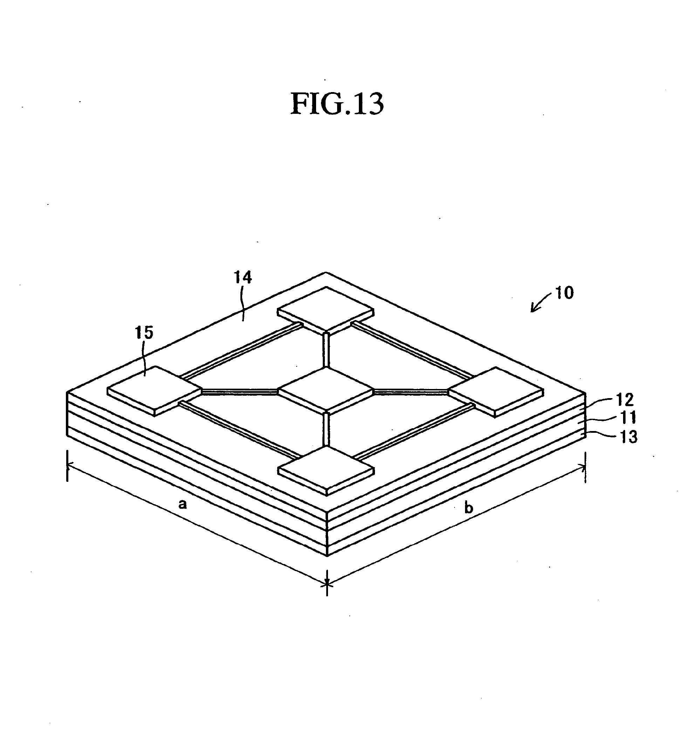

The terminal 15 may be formed in a lattice having a wider frame than that in the first embodiment, in plan view, as shown in FIG. 12. Further, the terminal 15 may be composed of plural islands arranged so as to be apart from each other and bridges that connect the adjacent islands as shown in FIG. 13.

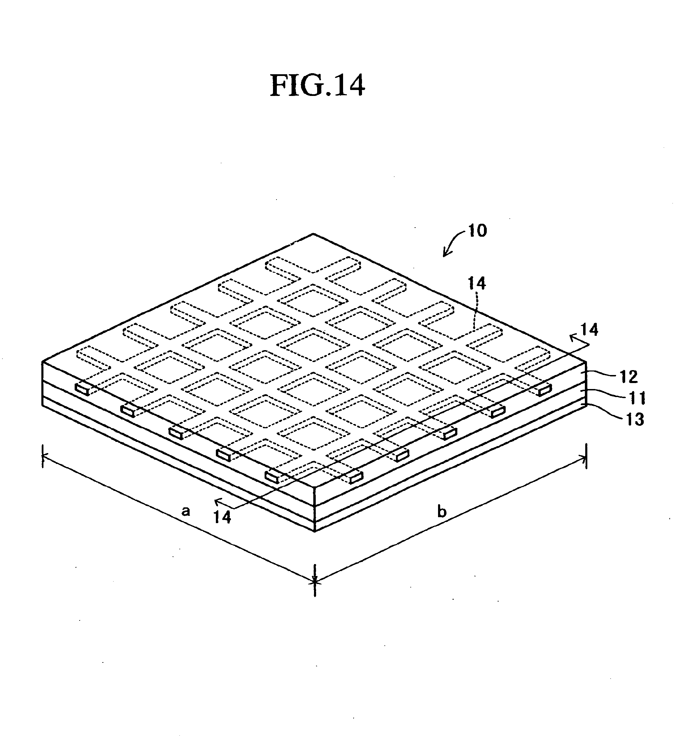

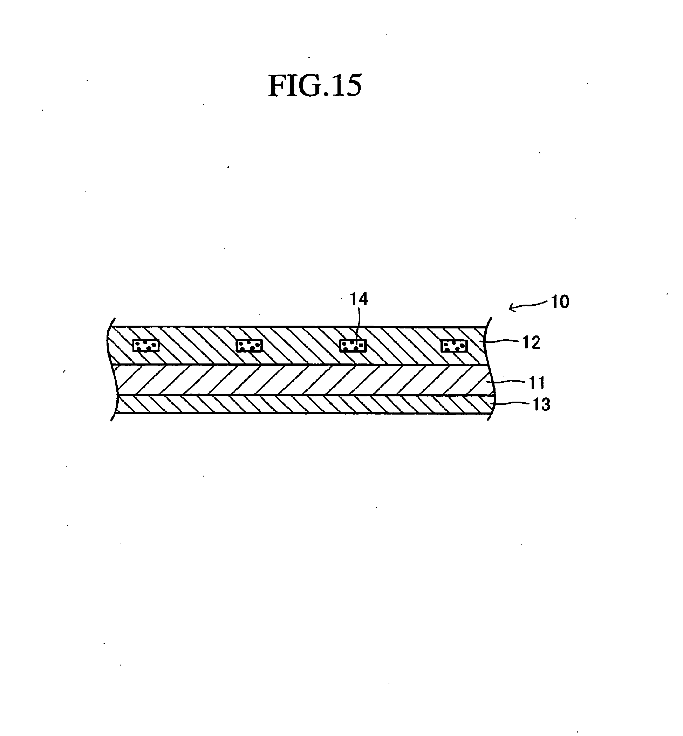

Although the porous layer 14 is formed on the fuel electrode layer 12 in the first embodiment, a porous layer 14 made of a porous insulating member and having a thermal expansion coefficient smaller than the thermal expansion coefficient of the fuel electrode layer 12 may be embedded in the fuel electrode layer 12 as shown in FIGS. 14 and 15. In this case, the terminal 15 is unnecessary. FIGS. 14 and 15 illustrate the example in which the porous layer 14 is formed in a lattice in plan view, for example.

Even by the structure in which the porous layer 14 is embedded into the fuel electrode layer 12 as described above, the operation and effect same as those in the first embodiment can be obtained. In this case too, it is preferable that the ratio of the area occupied by the porous layer 14 with respect to the whole thin plate member 10 is not less than 50 %. Further, it can be configured such that the thickness of the solid electrolyte layer 11 is 15 to 50 $\mu$m, the thickness of the fuel electrode layer 12 is 3 to 50 $\mu$m, the thickness of the air electrode layer 13 is 3 to 50 $\mu$m, and the difference in the thermal expansion coefficient between the porous layer 14 and the fuel electrode layer 12 is 4 to 9.5 ppm/K. Moreover, it can be configured such that the thickness of the solid electrolyte layer 11 is 1 to 10 $\mu$m, the thickness of the fuel electrode layer 12 is 50 to 250 $\mu$m, the thickness of the air electrode layer is 3 to 50 $\mu$m, and the difference in the thermal expansion coefficient between the porous layer 14 and the fuel electrode layer 12 is 4 to 9.5 ppm/K.

SECOND EMBODIMENT

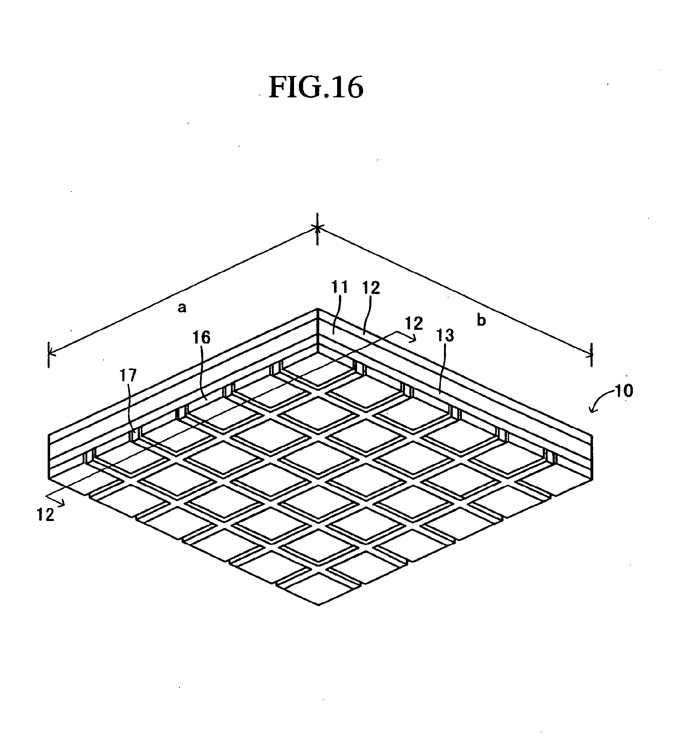

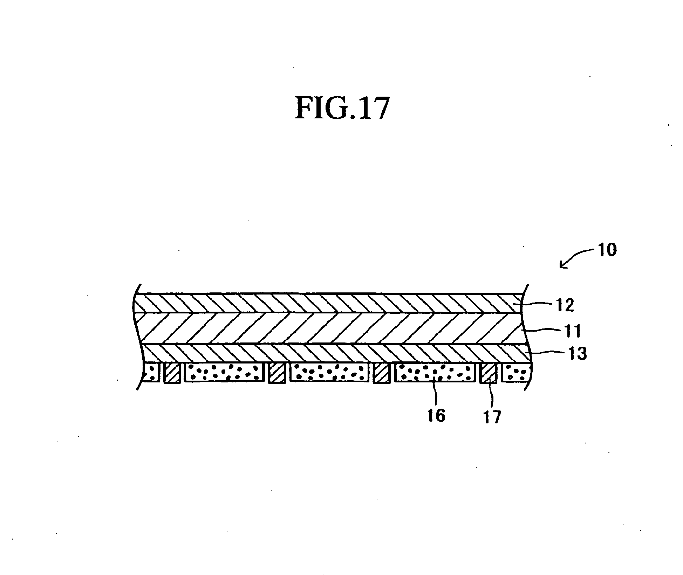

Next, a structure of a thin plate member 10 according to a second embodiment will be explained in detail with reference to FIGS. 16 and 17. FIG. 16 is a perspective view of the thin plate member 10 according to the second embodiment, and FIG. 17 is a partial sectional view of the thin plate member 10 cut along the plane that includes 12-12 line parallel to the side having the length a and is perpendicular to the plane of the thin plate member 10 in FIG. 16.

The thin plate member 10 according to the second embodiment is different from the thin plate member in the first embodiment in that a porous layer 16 made of a porous insulating member and having a thermal expansion coefficient greater than the thermal expansion coefficient of the air electrode layer 13 and a terminal 17 are formed at the lower surface of the air electrode layer 13. The different point will mainly be explained.

Like the first embodiment, the thin plate member 10 according to the second embodiment is a sintered plate member having a square planar shape. The lengths a, b of one side are not less than 5 mm and not more than 200 mm. The thickness of the thin plate member 10 is not less than 24 $\mu$m and not more than 360 $\mu$m. Specifically, the thin plate member 10 is extremely thin and is easy to be deformed.

The thin plate member 10 includes, like the first embodiment, an electrolyte layer 11, a fuel electrode layer 12 and an air electrode layer 13. The porous layer 16 and the terminal 17 are laminated and formed on the lower surface (other surface) of the air electrode layer 13. The terminal 17 is formed so as to be in a lattice in plan view (see FIG. 12) and so as to have a rectangle side face (see FIG. 13). The porous layer 16 is formed all over (except for the vicinity of the side face of the terminal 17) the remaining portion of the lower surface of the air electrode layer 13 where the terminal 17 is not formed.

The height of the terminal 17 is slightly greater than the thickness of the porous layer 16. The sintered film 40 (see FIG. 2) is formed on the lower surface of the porous layer 16 and the lower surface of the terminal 17. Therefore, the terminal 17 can take out electrons, which are produced by the power generation reaction of the thin plate member 10, to the outside through the sintered film 40, mesh 30, and support member 20. On the other hand, the porous layer 16 is formed so as to prevent the warp on the thin plate member 10 as described later.

In this embodiment, the materials of the electrolyte layer 11, fuel electrode layer 12, and air electrode layer 13 are the same as those in the first embodiment. Specifically, the thermal expansion coefficient of the fuel electrode layer 12 is greater than the thermal expansion coefficient of the electrolyte layer 11, and the thermal expansion coefficient of the air electrode layer 13 is (generally) equal to the thermal expansion coefficient of the electrolyte layer 11.

The porous layer 16 is a porous and insulating sintered body made of, for example, magnesia. The porosity (the ratio of the volume of pores with respect to the whole) of the porous layer 16 is 10 to 80 %. Preferably, it is 20 to 70 % (30 to 60 %). The electrical resistance of the porous layer 16 is $10^3$ to $10^4$ $\Omega \cdot$ m. The average thermal expansion coefficient of the porous layer 16 from room temperature to 1000 °C is approximately 14.5 ppm/K. Specifically, the thermal expansion coefficient of the porous layer 16 is greater than the thermal expansion coefficient of the air electrode layer 13.

In the thin plate member 10 having the aforesaid structure and size and used as a unit cell of the fuel cell A, the thermal expansion coefficient of the fuel electrode layer 12 is greater than the thermal expansion coefficient of the electrolyte layer 11, and the thermal expansion coefficient of the porous layer 16 is greater than the thermal expansion coefficient of the air electrode layer 13 (and the electrolyte layer 11). Accordingly, the deformation direction of the thin plate member 10 based upon the internal stress caused by the difference in the thermal expansion coefficient between the electrolyte layer 11 and the fuel electrode layer 12 and the deformation direction of the thin plate member 10 based upon the internal stress caused by the difference in the thermal expansion coefficient between the air electrode layer 13 and the porous layer 16 can be made reverse to each other. As a result, the warp of the whole thin plate member 10 caused by the internal stress based upon the difference in the thermal expansion coefficient between the layers can be reduced.

The porous layer 16 interposed between the air flow path Pa (see FIG. 3) and the air electrode layer 13 is made of a porous member. Therefore, the flow path of the air from the air flow path Pa to the lower surface of the air electrode layer 13 can sufficiently be secured. Accordingly, the circulation of the air to the lower surface of the air electrode layer 13 is difficult to be hindered. Consequently, the permeability of the air in the thin plate member 10 (unit cell) can be secured, thereby preventing the reduction in the power generation efficiency of the fuel cell A.

In the above-mentioned structure, the ratio of the area occupied by the porous layer 16 with respect to the whole thin plate member 10 is not less than 50 % in plan view. Therefore, the above-mentioned effect of reducing the warp on the thin plate member 10 provided by the porous layer 16 can uniformly and sufficiently be demonstrated.

Additionally, the existence region of the terminal 17 in the area of the whole thin plate member 10 is extremely uniformly arranged. Specifically, in any square regions in plan view that are a part of the whole thin plate member 10 and have the area of 50 % of the whole area of the thin plate member 10 in plan view, the ratio of the area occupied by the terminal 17 with respect to the square region in plan view is not less than 3 % and not more than 50 %.

The porous layer 16 is formed generally all over the remaining portion (on the portion not less than 95 %) of the lower surface of the air electrode layer 13 where the terminal 17 is not formed. Specifically, the existence region of the porous layer 16 is extremely uniformly arranged even in the region of the whole thin plate member 10. As a result, the effect of reducing the warp on the thin plate member 10 provided by the porous layer 16 can extremely uniformly and sufficiently be demonstrated.

Since the existence region of the terminal 17 is extremely uniformly arranged in the region of the whole thin plate member 10, the sum of the outer peripheries of the region (aforesaid terminal contact region) that is in contact with the (root) of the terminal 17 on the lower surface of the air electrode layer 13 is great. Specifically, the aforesaid diffusion phenomenon becomes more noticeable like the first embodiment. Therefore, according to the second embodiment, the air can reach the lower surface of the electrolyte layer 11 more uniformly. As a result, the power generation efficiency of the fuel cell A can be further enhanced in case where the total area of the terminal 17 is constant in plan view (e.g., in case where the gas permeability is constant).

The requirement that "the ratio of the area occupied by the terminal 17 is not less than 3 % and not more than 50 %" is determined considering the tendency in which the gar permeability increases as the ratio of the area of the terminal 17 decreases, and the tendency in which the internal resistance of the thin plate member 10 decreases as the ratio of the area of the terminal 17 increases.

Subsequently explained is the optimum combination of the thicknesses of the electrolyte layer 11, fuel electrode layer 12 and air electrode layer 13, the difference in the thermal expansion coefficient between the porous layer 16 and the air electrode layer 13, and the thickness and porosity of the porous layer 16 in the case where the securing of the gas permeability and the demonstration of the warp reducing effect are considered.

Considered firstly is the case in which the thickness of the electrolyte layer 11, the thickness of the fuel electrode layer 12 and the thickness of the air electrode layer 13 are 15 to 50 $\mu$m, 3 to 50 $\mu$m, and 3 to 50 $\mu$m, respectively in the thin plate member 10 (i.e., the thin plate member 10 is supported by the electrolyte layer 11), and the difference in the thermal expansion coefficient between the air electrode layer 13 and the porous layer 16 is 1.7 to 3.5 ppm.K.

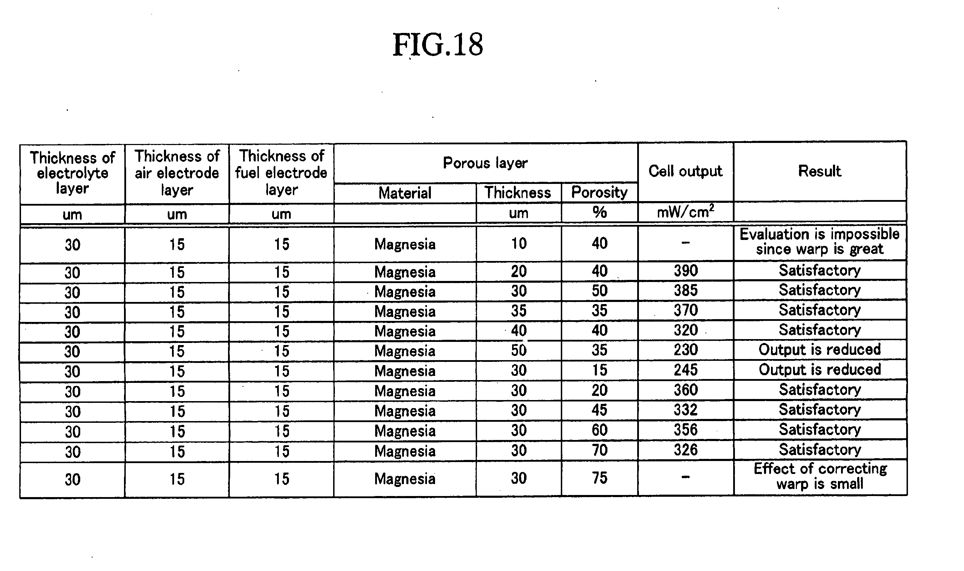

FIG. 18 shows a result of the experiment in which samples (cells) of the thin plate member 10 having the electrolyte layer 11 with a thickness of 30 $\mu$m, fuel electrode layer 12 with a thickness of 15 $\mu$m, air electrode layer 13 with a thickness of 15 $\mu$m, and porous layer 16 made of magnesia are manufactured as one example of the thin plate member 10, wherein the combinations of the thickness and the porosity of the porous layer 16 are different in each sample, and the power generation characteristic and the warp state after the sintering are evaluated for every sample. The output density (mW/cm$^2$) of the cell output at the rated output (0.7 V) at 800 °C is employed as the power generation characteristic, like the case of FIG. 6.

As understood from FIG. 18, when the thickness of the porous layer 16 is less than 20 $\mu$m, the warp is great, so that the evaluation is impossible. It is considered that this is because the rigidity of the porous layer 16 is insufficient, and hence, the warp reducing effect is insufficient, since the thickness of the porous layer 16 is too small. On the other hand, when the thickness of the porous layer 16 is not less than 20 $\mu$m, the warp reducing effect can sufficiently be demonstrated. It is to be noted that, when the thickness of the porous layer 16 is not less than 50 $\mu$m, the output density becomes small. It is considered that this is because the gas permeability is reduced, since the thickness of the porous layer 16 is too great.

When the porosity of the porous layer 16 is not more than 15 %, the output density becomes small. It is considered that this is because the gas permeability is reduced since the porosity of the porous layer 16 is too small. On the other hand, when the porosity of the porous layer 16 is not less than 20 %, sufficient output density of not less than 300 (mW/cm$^2$) can be obtained. It is to be noted that, when the porosity of the porous layer 16 is not less than 75 %, the warp becomes great. It is considered that this is because the rigidity of the porous layer 16 is insufficient, and hence, the warp reducing effect is insufficient, since the porosity of the porous layer 16 is too great.

From the above, it is preferable in this case that the thickness of the porous layer 16 is 20 to 40 $\mu$m, and the porosity thereof is 20 to 70 %. By virtue of this structure, it is found that the warp reducing effect can sufficiently be demonstrated while securing the permeability of the gar (air). It is estimated that this is based upon the fact that, as the porosity of the porous layer 16 increases or as the thickness of the porous layer 16 is decreased, there is a tendency of enhancing the gas permeability, and as the porosity of the porous layer 16 increases, there is a tendency of increasing the thickness of the porous layer 16 necessary for sufficiently demonstrating the warp reducing effect.

Subsequently considered is the case in which the thickness of the electrolyte layer 11, the thickness of the fuel electrode layer 12 and the thickness of the air electrode layer 13 are 1 to 10 $\mu$m, 50 to 250 $\mu$m, and 3 to 50 $\mu$m, respectively in the thin plate member 10 (i.e., the thin plate member 10 is supported by the fuel electrode layer 12), and the difference in the thermal expansion coefficient between the air electrode layer 13 and the porous layer 16 is 1.7 to 3.5 ppm.K.

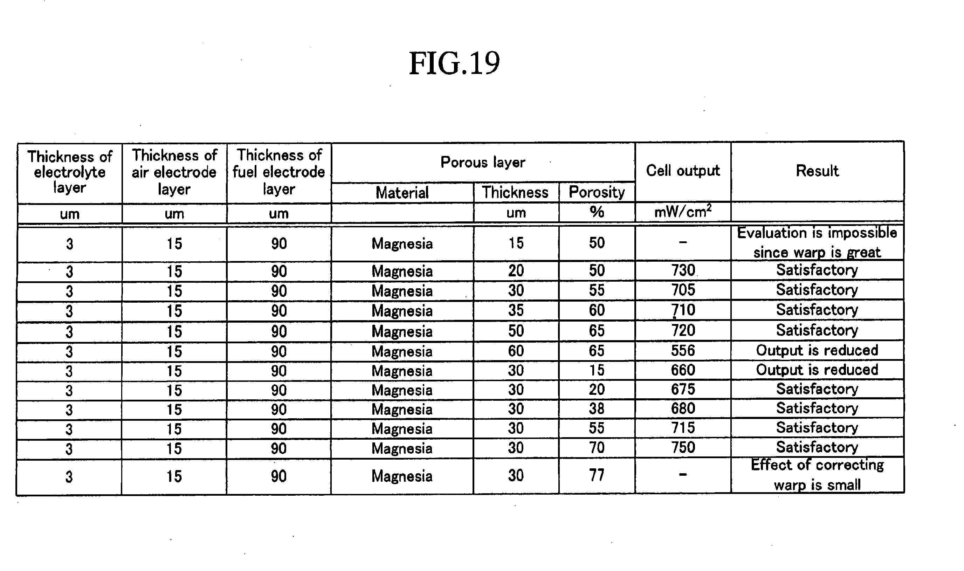

FIG. 19 shows a result of the experiment in which samples (cells) of the thin plate member 10 having the electrolyte layer 11 with a thickness of 3 $\mu$m, fuel electrode layer 12 with a thickness of 90 $\mu$m, air electrode layer 13 with a thickness of 15 $\mu$m, and porous layer 16 made of magnesia are manufactured as one example of the thin plate member 10, wherein the combinations of the thickness and the porosity of the porous layer 16 are different in each sample, and the power generation characteristic and the warp state after the sintering are evaluated for every sample. The output density (mW/cm$^2$) of the cell output at the rated output (0.7 V) at 800 °C is employed as the power generation characteristic, like the case of FIG. 6.

As understood from FIG. 19, when the thickness of the porous layer 16 is less than 20 $\mu$m, the warp is great, so that the evaluation is impossible. It is considered that this is because the rigidity of the porous layer 16 is insufficient, and hence, the warp reducing effect is insufficient, since the thickness of the porous layer 16 is too small. On the other hand, when the thickness of the porous layer 16 is not less than 20 $\mu$m, the warp reducing effect can sufficiently be demonstrated. It is to be noted that, when the thickness of the porous layer 16 is not less than 60 $\mu$m, the output density becomes small. It is considered that this is because the gas permeability is reduced, since the thickness of the porous layer 14 is too great.

When the porosity of the porous layer 16 is not more than 15 %, the output density becomes small. It is considered that this is because the gas permeability is reduced since the porosity of the porous layer 16 is too small. On the other hand, when the porosity of the porous layer 16 is not less than 20 %, sufficient output density of not less than 650 (mW/cm$^2$) can be obtained. It is to be noted that, when the porosity of the porous layer 16 is not less than 75 %, the warp becomes great. It is considered that this is because the rigidity of the porous layer 16 is insufficient, and hence, the warp reducing effect is insufficient, since the porosity of the porous layer 16 is too great.

From the above, it is preferable in this case that the thickness of the porous layer 16 is 20 to 50 $\mu$m, and the porosity thereof is 20 to 70 %. By virtue of this structure, it is found that the warp reducing effect can sufficiently be demonstrated while securing the permeability of the gar (air).

According to the second embodiment, the porous layer 16, which is made of porous insulating member and has a thermal expansion coefficient greater that the thermal expansion coefficient of the air electrode layer 13, is laminated and formed on the lower surface of the air electrode layer 13, whereby the warp on the thin plate member 10 is prevented and the gas permeability can sufficiently be secured.

In addition, the porous layer 16 and the terminal 17 are extremely uniformly arranged in plan view. As a result, the effect of reducing the warp on the thin plate member 10 provided by the porous layer 16 can extremely uniformly and sufficiently be demonstrated.

One example of a method of manufacturing the thin plate member 10 shown in FIGS. 16 and 17 will be explained. Firstly, a square sheet (a layer serving as the fuel electrode layer 12) is formed on the upper surface of a square ceramic sheet (a layer serving as the electrolyte layer 11) by a printing method, and the resultant is sintered at 1400 °C for one hour. Thereafter, a square sheet (a layer serving as the air electrode layer 13) is formed on the lower surface of the sintered body by a printing method, and a pattern (a layer serving as the porous layer 16) having a shape corresponding to the porous layer 16 is formed by a printing method. The resultant is sintered at 1200 °C for one hour.

Then, a pattern (a layer serving as the terminal 17) having a shape corresponding to the terminal 17 is formed on the lower surface of the sintered body, and the resultant is sintered at 1000 °C for one hour. Thus, the thin plate member 10 shown in FIGS. 16 and 17 is manufactured.

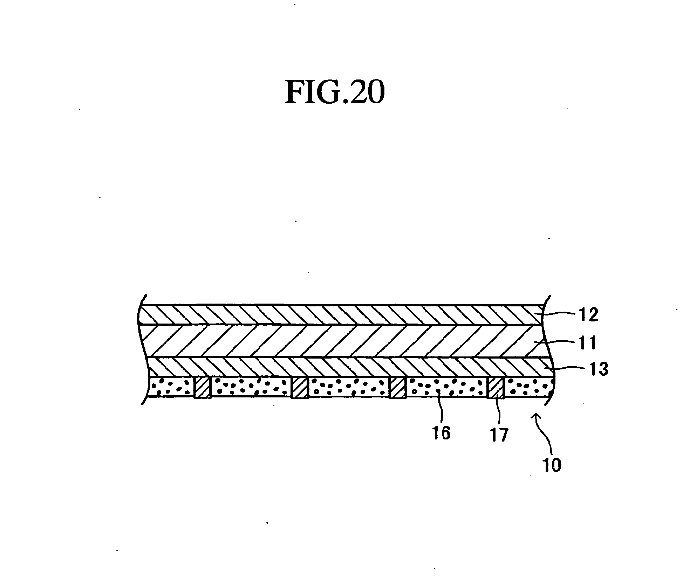

The present invention is not limited to the second embodiment, and various modifications are possible within the scope of the present invention. For example, a slight gap is formed between the side face of the porous layer 16 and the side face of the terminal 17 at the side sectional surface as shown in FIG. 17 according to the second embodiment. However, the side faces of the porous layer 16 and the terminal 17 are brought into contact with each other at the side sectional surface as shown in FIG. 20.

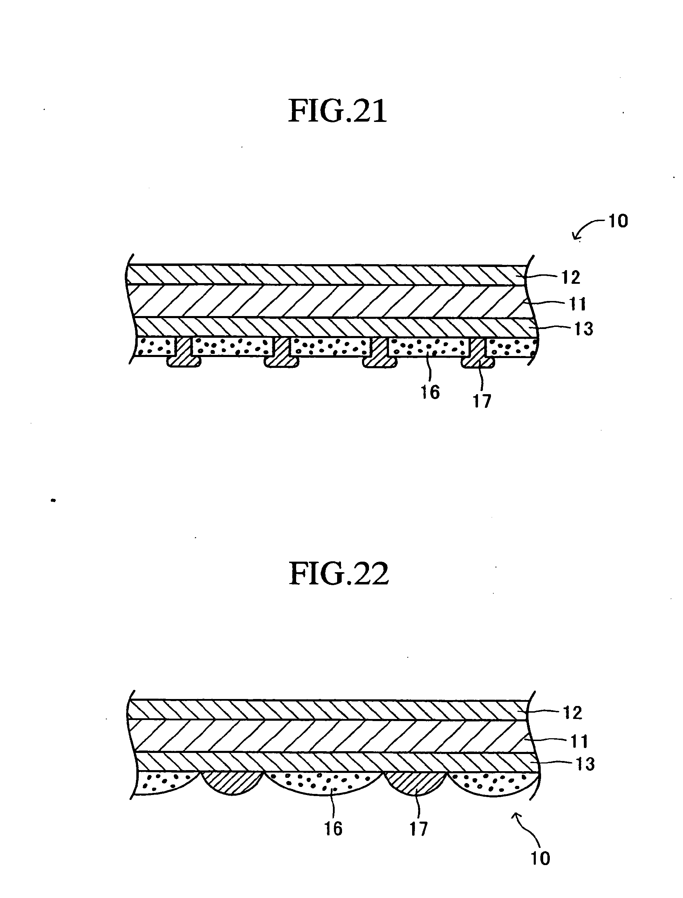

Although the side sectional surface of the terminal 17 is formed into a rectangle in the second embodiment, the side sectional surface of the terminal 17 may be formed into a T-like shape as shown in FIG. 21. Further, as shown in FIG. 22, the upper surfaces of the porous layer 16 and the terminal 17 may be formed into a convex shape at the side sectional surface.

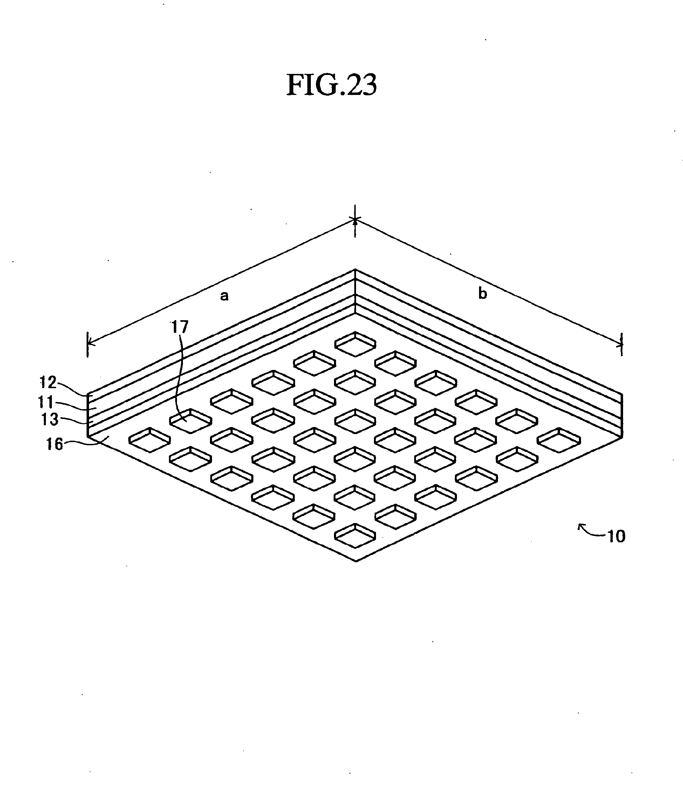

Although the terminal 17 is formed in a lattice (see FIG. 16), in plan view, in the second embodiment, the terminal 17 is formed into plural islands, in plan view, aligned in the longitudinal direction and widthwise direction so as to be apart from each other as shown in FIG. 23. In this case, the plural terminals 17 are arranged and formed in such a manner that the area of the whole thin plate member 10 is not less than 25 mm$^2$ and not more than 40000 mm$^2$ in plan view, four or more terminals 17 are formed so as to be apart from each other, and each of the minimum spaces between each terminal and the other terminals is not less than 0.5 mm and not more than 10 mm.

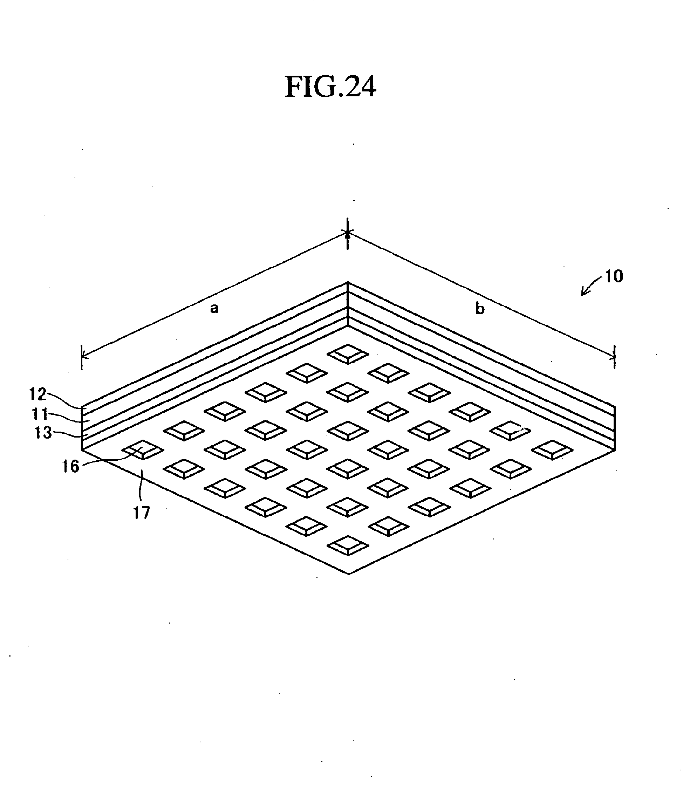

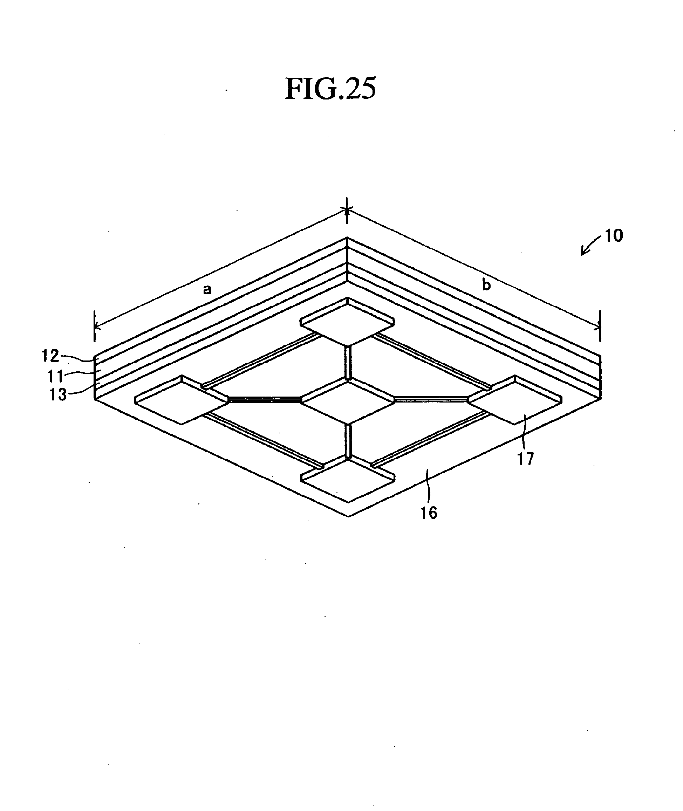

The terminal 17 may be formed in a lattice having a wider frame than that in the second embodiment, in plan view, as shown in FIG. 24. Further, in plan view, the terminal 17 may be composed of plural islands arranged so as to be apart from each other and bridges that connect the adjacent islands as shown in FIG. 25.

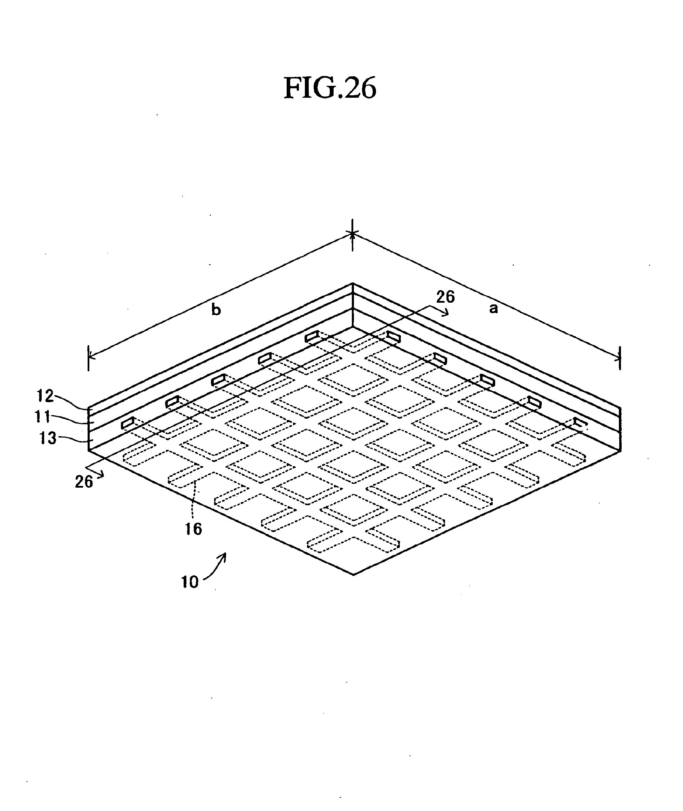

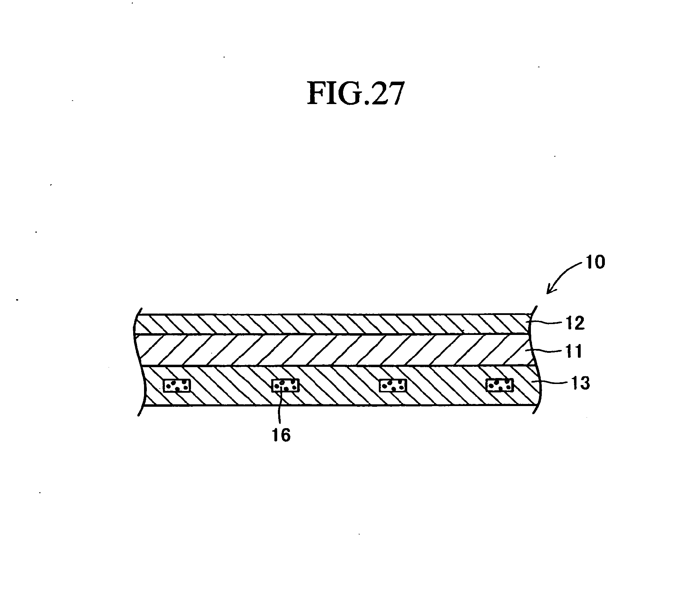

Although the porous layer 16 is formed below the air electrode layer 13 in the second embodiment, a porous layer 16 made of a porous insulating member and having a thermal expansion coefficient greater than the thermal expansion coefficient of the air electrode layer 13 may be embedded in the air electrode layer 13 as shown in FIGS. 26 and 27. In this case, the terminal 17 is unnecessary. FIGS. 26 and 27 illustrate the example in which the porous layer 16 is formed in a lattice in plan view, for example.

Even by the structure in which the porous layer 16 is embedded into the air electrode layer 13 as described above, the operation and effect same as those in the second embodiment can be obtained. In this case too, it is preferable that the ratio of the area occupied by the porous layer 16 with respect to the whole thin plate member 10 is not less than 50 %. Further, it can be configured such that the thickness of the solid electrolyte layer 11 is 15 to 50 $\mu$m, the thickness of the fuel electrode layer 12 is 3 to 50 $\mu$m, the thickness of the air electrode layer 13 is 3 to 50 $\mu$m, and the difference in the thermal expansion coefficient between the porous layer 14 and the fuel electrode layer 12 is 1.7 to 3.5 ppm/K. Moreover, it can be configured such that the thickness of the solid electrolyte layer 11 is 1 to 10 $\mu$m, the thickness of the fuel electrode layer 12 is 50 to 250 $\mu$m, the thickness of the air electrode layer 13 is 3 to 50 $\mu$m, and the difference in the thermal expansion coefficient between the porous layer 16 and the air electrode layer 13 is 1.7 to 3.5 ppm/K.

The porous layer 14, which is made of porous insulating member and has a thermal expansion coefficient smaller than the thermal expansion coefficient of the fuel electrode layer 12, may be formed on the upper surface of the fuel electrode layer 12, and the porous layer 16, which is made of porous insulating member and has a thermal expansion coefficient greater than the thermal expansion coefficient of the air electrode layer 13, may be formed on the lower surface of the air electrode layer 13. By this configuration, the warp on the thin plate member 10 can be prevented, and the gas permeability can sufficiently be secured.

The porous layer 14, which is made of porous insulating member and has a thermal expansion coefficient smaller than the thermal expansion coefficient of the fuel electrode layer 12, may be embedded into the fuel electrode layer 12, and the porous layer 14, which is made of porous insulating member and has a thermal expansion coefficient greater than the thermal expansion coefficient of the air electrode layer 13, may be embedded into the air electrode layer 13. By this configuration, the warp on the thin plate member 10 can be prevented, and the gas permeability can sufficiently be secured.

**Claims**

1. A thin plate member (10) for a solid oxide fuel cell comprising:

   a solid electrolyte layer (11);
   a first electrode layer (12) formed on a first surface of the solid electrolyte layer (11), having a thermal expansion coefficient greater than that of the solid electrolyte layer (11), and suitable to receive a supply of a fuel gas; and
   a second electrode layer (13) formed on the second surface of the solid electrolyte layer (11), and suitable to receive a supply of oxide gas,
   wherein one of I and II below applies:

   I. either

   (a) the thin plate member (10) comprises a porous insulating layer (14) formed on the surface of the first electrode layer (12) remote from the solid electrolyte layer (11) and in the form of a porous insulating member having a thermal expansion coefficient smaller than that of the first electrode layer, or
   (b) a porous insulating layer (16) formed on the surface of the second electrode layer (13) remote from the solid electrolyte layer (11) and in the form of a porous insulating member having a thermal expansion coefficient greater than that of the second electrode layer (13), and

   wherein said solid electrolyte layer (11), said first and second electrode layers (12, 13) and said porous layer (14, 16) are laminated and sintered, and the thickness of the thin plate member is not more than 360 $\mu$m, and wherein in case (a) above, either

   (1) the thickness of the solid electrolyte layer (11) is 15 to 50 $\mu$m, the thickness of the first electrode layer (12) is 3 to 50 $\mu$m, the thickness of the second electrode layer (13) is 3 to 50 $\mu$m, the difference in the thermal expansion coefficient between the porous layer (14) and the first electrode layer (12) is 4 to 9.5 ppm/K, the thickness of the porous layer (14) is 10 to 30 $\mu$m, and the porosity of the porous layer (14) is 20 to 70 %,

   or

   (2) the thickness of the solid electrolyte layer (11) is 1 to 10 $\mu$m, the thickness of the first electrode layer (12) is 50 to 250 $\mu$m, the thickness of the second electrode layer (13) is 3 to 50 $\mu$m, the difference in the thermal expansion coefficient between the porous layer (14) and the first electrode layer (12) is 4 to 9.5 ppm/K, the thickness of the porous layer (14) is 10 to 50 $\mu$m, and the porosity of the porous layer (14) is 20 to 70%,

   and in case (b) above, either

   (3) the thickness of the solid electrolyte layer (11) is 15 to 50 $\mu$m, the thickness of the first electrode layer (12) is 3 to 50 $\mu$m, the thickness of the second electrode layer (13) is 3 to 50 $\mu$m, the difference in the thermal expansion coefficient between the porous layer (16) and the second electrode layer (13) is 1.7 to 3.5 ppm/K, the thickness of the porous layer (16) is 20 to 40 $\mu$m, and the porosity of the porous layer (16) is 20 to 70%,

   or

   (4) the thickness of the solid electrolyte layer (11) is 1 to 10 $\mu$m, the thickness of the first electrode layer (12) is 50 to 250 $\mu$m, the thickness of the second electrode layer (13) is 3 to 50 $\mu$m, the difference in the thermal expansion coefficient between the porous layer (16) and the second electrode layer (13) is 1.7 to 3.5 ppm/k, the thickness of the porous layer (16) is 20 to 50 $\mu$m, and the porosity of the porous layer (16) is 20 to 70%,

   II. said first and second electrode layers (12, 13) are laminated and sintered, and

   either:

(c) a porous insulating layer (14) made of a porous insulating member having a coefficient of thermal expansion smaller than that of the first electrode layer (12) is embedded within the first electrode layer (12), or (d) a porous insulating layer (16) made of a porous insulating member having a thermal expansion coefficient greater than that of the second electrode layer (13) is embedded within the second electrode layer (16),

wherein in case (c) above, either

(5) the thickness of the solid electrolyte layer (11) is 15 to 50 $\mu$m, the thickness of the first electrode layer (12) is 3 to 50 $\mu$m, the thickness of the second electrode layer (13) is 3 to 50 $\mu$m, and the difference in the thermal expansion coefficient between the porous layer (14) and the first electrode layer (12) is 4 to 9.5 ppm/k,

or

(6) the thickness of the solid electrolyte layer (11) is 1 to 10 $\mu$m, the thickness of the first electrode layer (12) is 50 to 250 $\mu$m, and the thickness of the second electrode layer (13) is 3 to 50 $\mu$m, and the difference in the thermal expansion coefficient between the porous layer (14) and the first electrode layer (12) is 4 to 9.5 ppm/K,

and in case (d) above, either

(7) the thickness of the solid electrolyte layer (11) is 15 o 50 $\mu$m, the thickness of the first electrode layer (12) is 3 to 50 $\mu$m, the thickness of the second electrode layer (13) is 3 to 50 $\mu$m, and the difference in the thermal expansion coefficient between the porous layer (16) and the second electrode layer (13) is 1.7 to 3.5 ppm/K,

or

(8) the thickness of the solid electrolyte layer (11) is 1 to 10 $\mu$m, the thickness of the first electrode layer (12) is 50 to 250 $\mu$m, the thickness of the second electrode layer (13) is 3 to 50 $\mu$m, and the difference in the thermal expansion coefficient between the porous layer (16) and the second electrode layer (13) is 1.7 to 3.5 ppm/K.

2. A thin plate member according to claim 1, wherein the ratio of the area occupied by the porous layer (14, 16) with respect to the whole thin plate member (10) in plan view is not less than 50 %.

3. A thin plate member according to claim 1 or 2 wherein case (a) applies and an electrode terminal (15) for taking electrons, which are produced by a power generation reaction of the thin plate member, to the outside is formed on a portion of said surface of the first electrode layer (12) where the porous layer (14) is not formed.

4. A thin plate member according to claim 3, wherein in any region seen in plan view that is a part of the whole thin plate member having an area of 50 % of that of the whole thin plate member seen in plan view, the ratio of the area occupied by the terminal (15) with respect to the region is not less than 3 % and not more than 50 %.

5. A thin plate member according to claim 4, wherein
the area of the whole thin plate member in plan view is not less than 25 mm$^2$ and not more than 40000 mm$^2$,
four or more said terminals (15) are formed so as to be apart from one another,
and
each of the minimum spaces in plan view between each said terminal (17) and the other terminals (15) is not less than 0.5 mm and not more than 10 mm.

6. A thin plate member according to claim 1 or 2 wherein case (b) applies and an electrode terminal (17) for taking electrons, which are produced by a power generation reaction of the thin plate member, to the outside is formed on a portion of said surface of the second electrode layer (13) where the porous layer (16) is not formed.

7. A thin plate member according to claim 6, wherein in any region seen in plan view that is a part of the whole thin plate member having an area of 50 % of that of the whole thin plate member seen in plan view, the ratio of the area occupied by the terminal (17) with respect to the region is not less than 3 % and not more than 50 %.

**8.** A thin plate member according to claim 7, wherein
the area of the whole thin plate member in plan view is not less than 25 mm$^2$ and not more than 40000 mm$^2$,
four or more terminals (17) are formed so as to be apart from one another, and each of the minimum spaces in plan
view between each said terminal (17) and the other terminals (17) is not less than 0.5 mm and not more than 10 mm.

**Patentansprüche**

**1.** Dünnes Plattenelement (10) für eine Festoxidbrennstoffzelle, das Folgendes umfasst:

eine Festelektrolytschicht (11);
eine erste Elektrodenschicht (12), die auf einer ersten Oberfläche der Festelektrolytschicht (11) ausgebildet ist
und einen Wärmeausdehnungskoeffizienten aufweist, der größer ist als jener der Festelektrolytschicht (11),
und geeignet ist, um die Zufuhr von Brenngas aufzunehmen, und
eine zweite Elektrodenschicht (13), die auf der zweiten Oberfläche der Festelektrolytschicht (11) ausgebildet
ist und geeignet ist, um die Zufuhr von Oxidgas aufzunehmen,
worin einer der nachstehend angeführten Punkte I und II zutrifft:

I. entweder

(a) das dünne Plattenelement (10) umfasst eine poröse Isolationsschicht (14), die auf der Oberfläche
der ersten Elektrodenschicht (12) von der Festelektrolytschicht (11) entfernt und in Form eines porösen
Isolationselements mit einem geringeren Wärmeausdehnungskoeffizienten als die erste Elektrodenschicht ausgebildet ist, oder
(b) eine poröse Isolationsschicht (16), die auf der Oberfläche der zweiten Elektrodenschicht (13) von
der Festelektrolytschicht (11) entfernt und in Form eines porösen Isolationselements mit einem größeren Wärmeausdehnungskoeffizienten als die zweite Elektrodenschicht (13) ausgebildet ist, und

worin die Festelektrolytschicht (11), die erste und die zweite Elektrodenschicht (12, 13) und die poröse Schicht
(14, 16) laminiert und gesintert werden und die Dicke des dünnen Plattenelements nicht mehr als 360 μm beträgt,
und worin im oben angeführten Fall (a) entweder

(1) die Dicke der Festelektrolytschicht (11) 15 bis 50 μm beträgt, die Dicke der ersten Elektrodenschicht
(12) 3 bis 50 μm beträgt, die Dicke der zweiten Elektrodenschicht (13) 3 bis 50 μm beträgt, der Unterschied
in Bezug auf den Wärmeausdehnungskoeffizienten zwischen der porösen Schicht (14) und der ersten
Elektrodenschicht (12) 4 bis 9,5 ppm/K beträgt, die Dicke der porösen Schicht (14) 10 bis 30 μm beträgt
und die Porosität der porösen Schicht (14) 20 bis 70 % beträgt, oder
(2) die Dicke der Festelektrolytschicht (11) 1 bis 10 μm beträgt, die Dicke der ersten Elektrodenschicht (12)
50 bis 250 μm beträgt, die Dicke der zweiten Elektrodenschicht (13) 3 bis 50 μm beträgt, der Unterschied
in Bezug auf den Wärmeausdehnungskoeffizienten zwischen der porösen Schicht (14) und der ersten
Elektrodenschicht (12) 4 bis 9,5 ppm/K beträgt, die Dicke der porösen Schicht (14) 10 bis 30 μm beträgt
und die Porosität der porösen Schicht (14) 20 bis 70 % beträgt, und im oben angeführten Fall (b) entweder
(3) die Dicke der Festelektrolytschicht (11) 15 bis 50 μm beträgt, die Dicke der ersten Elektrodenschicht
(12) 3 bis 50 μm beträgt, die Dicke der zweiten Elektrodenschicht (13) 3 bis 50 μm beträgt, der Unterschied
in Bezug auf den Wärmeausdehnungskoeffizienten zwischen der porösen Schicht (16) und der zweiten
Elektrodenschicht (13) 1,7 bis 3,5 ppm/K beträgt, die Dicke der porösen Schicht (16) 20 bis 40 μm beträgt
und die Porosität der porösen Schicht (16) 20 bis 70 % beträgt,

oder

(4) die Dicke der Festelektrolytschicht (11) 1 bis 10 μm beträgt, die Dicke der ersten Elektrodenschicht (12)
50 bis 250 μm beträgt, die Dicke der zweiten Elektrodenschicht (13) 3 bis 50 μm beträgt, der Unterschied
in Bezug auf den Wärmeausdehnungskoeffizienten zwischen der porösen Schicht (16) und der zweiten
Elektrodenschicht (13) 1,7 bis 3,5 ppm/K beträgt, die Dicke der porösen Schicht (16) 20 bis 50 μm beträgt
und die Porosität der porösen Schicht (16) 20 bis 70 % beträgt;

II. die erste und die zweite Elektrodenschicht (12, 13) laminiert und gesintert werden und entweder:

(c) eine poröse Isolationsschicht (14) aus einem porösen Isolationselement mit einem geringeren Wärmeausdehnungskoeffizienten als die erste Elektrodenschicht (12) in die erste Elektrodenschicht (12) eingebettet wird oder

(d) eine poröse Isolationsschicht (16) aus einem porösen Isolationselement mit einem größeren Wärmeausdehnungskoeffizienten als die zweite Elektrodenschicht (12) in die zweite Elektrodenschicht (13) eingebettet wird, worin im oben angeführten Fall (c) entweder

(5) die Dicke der Festelektrolytschicht (11) 15 bis 50 $\mu$m beträgt, die Dicke der ersten Elektrodenschicht (12) 50 bis 250 $\mu$m beträgt, die Dicke der zweiten Elektrodenschicht (13) 3 bis 50 $\mu$m beträgt, der Unterschied in Bezug auf den Wärmeausdehnungskoeffizienten zwischen der porösen Schicht (14) und der ersten Elektrodenschicht (12) 4 bis 9,5 ppm/K beträgt;

oder

(6) die Dicke der Festelektrolytschicht (11) 1 bis 10 $\mu$m beträgt, die Dicke der ersten Elektrodenschicht (12) 50 bis 250 $\mu$m beträgt, die Dicke der zweiten Elektrodenschicht (13) 3 bis 50 $\mu$m beträgt, der Unterschied in Bezug auf den Wärmeausdehnungskoeffizienten zwischen der porösen Schicht (14) und der ersten Elektrodenschicht (12) 4 bis 9,5 ppm/K beträgt;

und im oben angeführten Fall (d) entweder

(7) die Dicke der Festelektrolytschicht (11) 15 bis 50 $\mu$m beträgt, die Dicke der ersten Elektrodenschicht (12) 3 bis 50 $\mu$m beträgt, die Dicke der zweiten Elektrodenschicht (13) 3 bis 50 $\mu$m beträgt, der Unterschied in Bezug auf den Wärmeausdehnungskoeffizienten zwischen der porösen Schicht (16) und der zweiten Elektrodenschicht (12) 1,7 bis 3,5 ppm/K beträgt;

oder

(8) die Dicke der Festelektrolytschicht (11) 1 bis 10 $\mu$m beträgt, die Dicke der ersten Elektrodenschicht (12) 50 bis 250 $\mu$m beträgt, die Dicke der zweiten Elektrodenschicht (13) 3 bis 50 $\mu$m beträgt, der Unterschied in Bezug auf den Wärmeausdehnungskoeffizienten zwischen der porösen Schicht (16) und der zweiten Elektrodenschicht (12) 1,7 bis 3,5 ppm/K beträgt.

2. Dünnes Plattenelement nach Anspruch 1, worin der Anteil der durch die poröse Schicht (14, 16) eingenommenen Fläche in Bezug auf die Gesamtfläche des dünnen Plattenelements (10) in der Draufsicht nicht weniger als 50 % beträgt.

3. Dünnes Plattenelement nach Anspruch 1 oder 2, worin Fall (a) zutrifft und ein Elektrodenanschluss (15) auf einem Abschnitt der Oberfläche der ersten Elektrodenschicht (12), in dem die poröse Schicht (14) nicht vorliegt, ausgebildet ist, um durch eine Stromerzeugungsreaktion des dünnen Plattenelements erzeugte Elektronen nach außen zu führen.

4. Dünnes Plattenelement nach Anspruch 3, worin in einem beliebigen Bereich, der in der Draufsicht betrachtet ein Teil des gesamten dünnen Plattenelements ist und eine Fläche von 50 % der Gesamtfläche des dünnen Plattenelements in Draufsicht aufweist, der Anteil der Fläche, die durch den Anschluss (15) eingenommen wird, in Bezug auf den Bereich nicht weniger als 3 % und nicht mehr als 50 % beträgt.

5. Dünnes Plattenelement nach Anspruch 4, worin
die Fläche des gesamten dünnen Plattenelements in Draufsicht nicht weniger als 25 mm$^2$ und nicht mehr als 40.000 mm$^2$ beträgt,
vier oder mehr Anschlüsse (15) so ausgebildet sind, dass sie voneinander entfernt sind, und
jeder der Mindestabstände zwischen jedem der Anschlüsse (15) und den anderen Anschlüssen (15) in Draufsicht nicht weniger als 0,5 mm und nicht mehr als 10 mm beträgt.

6. Dünnes Plattenelement nach Anspruch 1 oder 2, worin Fall (b) zutrifft und ein Elektrodenanschluss (17) auf einem Abschnitt der Oberfläche der ersten Elektrodenschicht (13), in dem die poröse Schicht (16) nicht vorliegt, ausgebildet ist, um durch eine Stromerzeugungsreaktion des dünnen Plattenelements erzeugte Elektronen nach außen zu führen.

7. Dünnes Plattenelement nach Anspruch 6, worin in einem beliebigen Bereich, der in der Draufsicht betrachtet ein Teil des gesamten dünnen Plattenelements ist und eine Fläche von 50 % der Gesamtfläche des dünnen Plattenelements in Draufsicht aufweist, der Anteil der Fläche, die durch den Anschluss (17) eingenommen wird, in Bezug auf den Bereich nicht weniger als 3 % und nicht mehr als 50 % beträgt.

8. Dünnes Plattenelement nach Anspruch 7, worin
die Fläche des gesamten dünnen Plattenelements in Draufsicht nicht weniger als 25 mm$^2$ und nicht mehr als 40.000 mm$^2$ beträgt,
vier oder mehr Anschlüsse (17) so ausgebildet sind, dass sie voneinander entfernt sind, und
jeder der Mindestabstände zwischen jedem der Anschlüsse (17) und den anderen Anschlüssen (17) in Draufsicht nicht weniger als 0,5 mm und nicht mehr als 10 mm beträgt.

**Revendications**

1. Elément formant plaque mince (10) pour une pile à combustible à oxyde solide comprenant :

   une couche d'électrolyte solide (11) ;
   une première couche d'électrode (12) formée sur une première surface de la couche d'électrolyte solide (11), ayant un coefficient de dilatation thermique supérieur à celui de la couche d'électrolyte solide (11), et appropriée pour recevoir une alimentation en combustible gazeux ; et
   une deuxième couche d'électrode (13) formée sur la deuxième surface de la couche d'électrolyte solide (11), et appropriée pour recevoir une alimentation en oxyde gazeux,
   dans lequel l'un de I et II ci-dessous s'applique :

      I. soit

         (a) l'élément formant plaque mince (10) comprend une couche isolante poreuse (14) formée sur la surface de la première couche d'électrode (12) à distance de la couche d'électrolyte solide (11) et sous la forme d'un élément isolant poreux ayant un coefficient de dilatation thermique inférieur à celui de la première couche d'électrode, soit
         (b) une couche isolante poreuse (16) formée sur la surface de la deuxième couche d'électrode (13) à distance de la couche d'électrolyte solide (11) et sous la forme d'un élément isolant poreux ayant un coefficient de dilatation thermique supérieur à celui de la deuxième couche d'électrode (13), et

      dans lequel ladite couche d'électrolyte solide (11), lesdites première et deuxième couches d'électrode (12, 13) et ladite couche poreuse (14, 16) sont lamifiées et frittées, et l'épaisseur de l'élément formant plaque mince est inférieure ou égale à 360 $\mu$m,
      et dans lequel dans le cas (a) ci-dessus, soit (1) l'épaisseur de la couche d'électrolyte solide (11) est de 15 à 50 $\mu$m, l'épaisseur de la première couche d'électrode (12) est de 3 à 50 $\mu$m, l'épaisseur de la deuxième couche d'électrode (13) est de 3 à 50 $\mu$m, la différence du coefficient de dilatation thermique entre la couche poreuse (14) et la première couche d'électrode (12) est de 4 à 9,5 ppm/K, l'épaisseur de la couche poreuse (14) est de 10 à 30 $\mu$m, et la porosité de la couche poreuse (14) est de 20 à 70 %,
      soit

         (2) l'épaisseur de la couche d'électrolyte solide (11) est de 1 à 10 $\mu$m, l'épaisseur de la première couche d'électrode (12) est de 50 à 250 $\mu$m, l'épaisseur de la deuxième couche d'électrode (13) est de 3 à 50 $\mu$m, la différence du coefficient de dilatation thermique entre la couche poreuse (14) et la première couche d'électrode (12) est de 4 à 9,5 ppm/K, l'épaisseur de la couche poreuse (14) est de 10 à 50 $\mu$m, et la porosité de la couche poreuse (14) est de 20 à 70 %,
         et dans le cas (b) ci-dessus, soit
         (3) l'épaisseur de la couche d'électrolyte solide (11) est de 15 à 50 $\mu$m, l'épaisseur de la première couche d'électrode (12) est de 3 à 50 $\mu$m, l'épaisseur de la deuxième couche d'électrode (13) est de 3 à 50 $\mu$m, la différence du coefficient de dilatation thermique entre la couche poreuse (16) et la deuxième couche d'électrode (13) est de 1,7 à 3,5 ppm/K, l'épaisseur de la couche poreuse (16) est 20 à 40 $\mu$m, et la porosité de la couche poreuse (16) est de 20 à 70 %, soit
         (4) l'épaisseur de la couche d'électrolyte solide (11) est de 1 à 10 $\mu$m, l'épaisseur de la première couche d'électrode (12) est de 50 à 250 $\mu$m, l'épaisseur de la deuxième couche d'électrode (13) est de 3 à 50 $\mu$m,

la différence du coefficient de dilatation thermique entre la couche poreuse (16) et la deuxième couche d'électrode (13) est de 1,7 à 3,5 ppm/k, l'épaisseur de la couche poreuse (16) est de 20 à 50 $\mu$m, et la porosité de la couche poreuse (16) est de 20 à 70 %,

II. lesdites première et deuxième couches d'électrode (12, 13) sont lamifiées et frittées, et soit

(c) une couche isolante poreuse (14) constituée d'un élément isolant poreux ayant un coefficient de dilatation thermique inférieur à celui de la première couche d'électrode (12) est intégré dans la première couche d'électrode (12), soit

(d) une couche isolante poreuse (16) constituée d'un élément isolant poreux ayant un coefficient de dilatation thermique supérieur à celui de la deuxième couche d'électrode (13) est intégrée dans la deuxième couche d'électrode (16), dans lequel, dans le cas (c) ci-dessus, soit (5) l'épaisseur de la couche d'électrolyte solide (11) est de 15 à 50 $\mu$m, l'épaisseur de la première couche d'électrode (12) est de 3 à 50 $\mu$m, l'épaisseur de la deuxième couche d'électrode (13) est de 3 à 50 $\mu$m, et la différence du coefficient de dilatation thermique entre la couche poreuse (14) et la première couche d'électrode (12) est de 4 à 9,5 ppm/K,

soit

(6) l'épaisseur de la couche d'électrolyte solide (11) est de 1 à 10 $\mu$m, l'épaisseur de la première couche d'électrode (12) est de 50 à 250 $\mu$m, et l'épaisseur de la deuxième couche d'électrode (13) est de 3 à 50 $\mu$m, et la différence du coefficient de dilatation thermique entre la couche poreuse (14) et la première couche d'électrode (12) est de 4 à 9,5 ppm/K,
et dans le cas (d) ci-dessus, soit

(7) l'épaisseur de la couche d'électrolyte solide (11) est de 15 à 50 $\mu$m, l'épaisseur de la première couche d'électrode (12) est de 3 à 50 $\mu$m, l'épaisseur de la deuxième couche d'électrode (13) est de 3 à 50 $\mu$m, et la différence du coefficient de dilatation thermique entre la couche poreuse (16) et la deuxième couche d'électrode (13) est de 1,7 à 3,5 ppm/K,
soit

(8) l'épaisseur de la couche d'électrolyte solide (11) est de 1 à 10 $\mu$m, l'épaisseur de la première couche d'électrode (12) est de 50 à 250 $\mu$m, l'épaisseur de la deuxième couche d'électrode (13) est de 3 à 50 $\mu$m, et la différence du coefficient de dilatation thermique entre la couche poreuse (16) et la deuxième couche d'électrode (13) est de 1,7 à 3,5 ppm/K.

2. Elément formant plaque mince selon la revendication 1, dans lequel le rapport de l'aire occupée par la couche poreuse (14, 16) par rapport à l'élément formant plaque mince (10) entier en vue plane est supérieur ou égal à 50 %.

3. Elément formant plaque mince selon la revendication 1 à 2, dans lequel le cas (a) s'applique et une borne d'électrode (15) pour prendre les électrons, qui sont produits par une réaction de génération d'énergie de l'élément formant plaque mince, vers l'extérieur est formée sur une partie de ladite surface de la première couche d'électrode (12) où la couche poreuse (14) n'est pas formée.

4. Elément formant plaque mince selon la revendication 3, dans lequel, dans n'importe quelle région vue en vue plane qui fait partie de l'élément formant plaque mince entier ayant une aire égale à 50 % de celle de l'élément formant plaque mince entier vu en vue plane, le rapport de l'aire occupée par la borne (15) par rapport à la région est supérieur ou égal à 3 % et inférieur ou égal à 50 %.

5. Elément formant plaque mince selon la revendication 4, dans lequel
l'aire de l'élément formant plaque mince entier en vue plane est supérieure ou égale à 25 mm$^2$ et inférieure ou égale à 40000 mm$^2$,
quatre ou plus desdites bornes (15) sont formées de manière à être espacées les unes des autres, et
chacun des espaces minimums en vue plane entre chaque dite borne (17) et les autres bornes (15) est supérieur ou égal à 0,5 mm et inférieur ou égal à 10 mm.

6. Elément formant plaque mince selon la revendication 1 ou 2, dans lequel le cas (b) s'applique et une borne d'électrode (17) pour prendre les électrons, qui sont produits par une réaction de génération d'énergie de l'élément formant plaque mince, vers l'extérieur est formée sur une partie de ladite surface de la deuxième couche d'électrode (13) où la couche poreuse (16) n'est pas formée.

7. Elément formant plaque mince selon la revendication 6, dans lequel, dans n'importe quelle région vue en vue plane qui fait partie de l'élément formant plaque mince entier ayant une aire égale à 50 % de celle de l'élément formant plaque mince entier vu en vue plane, le rapport de l'aire occupée par la borne (17) par rapport à la région est supérieur ou égal à 3 % et inférieur ou égal à 50 %.

8. Elément formant plaque mince selon la revendication 7, dans lequel
   l'aire de l'élément formant plaque mince entier en vue plane est supérieure ou égale à 25 mm$^2$ et inférieure ou égale à 40000 mm$^2$,
   quatre bornes (17) ou plus sont formées de manière à être espacées les unes des autres, et
   chacun des espaces minimums en vue plane entre chaque dite borne (17) et les autres bornes (17) est supérieur ou égal à 0,5 mm et inférieur ou égal à 10 mm.

# FIG.1

# FIG.2

EP 1 919 021 B1

# FIG.3

# FIG.4

# FIG.5

# FIG.6

| Thickness of electrolyte layer | Thickness of air electrode layer | Thickness of fuel electrode layer | Porous layer | | | Cell output | Result |
|---|---|---|---|---|---|---|---|
| | | | Material | Thickness | Porosity | | |
| um | um | um | | um | % | $mW/cm^2$ | |
| 30 | 15 | 15 | Zircon | 5 | 50 | – | Evaluation is impossible since warp is great |
| 30 | 15 | 15 | Zircon | 10 | 50 | 420 | Satisfactory |
| 30 | 15 | 15 | Zircon | 15 | 45 | 390 | Satisfactory |
| 30 | 15 | 15 | Zircon | 20 | 40 | 365 | Satisfactory |
| 30 | 15 | 15 | Zircon | 30 | 45 | 323 | Satisfactory |
| 30 | 15 | 15 | Zircon | 40 | 40 | 252 | Output is reduced |
| 30 | 15 | 15 | Zircon | 20 | 15 | 273 | Output is reduced |
| 30 | 15 | 15 | Zircon | 20 | 20 | 356 | Satisfactory |
| 30 | 15 | 15 | Zircon | 20 | 35 | 368 | Satisfactory |
| 30 | 15 | 15 | Zircon | 20 | 40 | 354 | Satisfactory |
| 30 | 15 | 15 | Zircon | 25 | 50 | 382 | Satisfactory |
| 30 | 15 | 15 | Zircon | 30 | 65 | 395 | Satisfactory |
| 30 | 15 | 15 | Zircon | 30 | 70 | 365 | Satisfactory |
| 30 | 15 | 15 | Zircon | 30 | 75 | – | Effect of correcting warp is small |

EP 1 919 021 B1

# FIG.7

| Thickness of electrolyte layer | Thickness of air electrode layer | Thickness of fuel electrode layer | Porous layer | | | Cell output | Result |
|---|---|---|---|---|---|---|---|
| | | | Material | Thickness | Porosity | | |
| um | um | um | | um | % | mW/cm$^2$ | |
| 3 | 15 | 90 | Zircon | 5 | 50 | – | Evaluation is impossible since warp is great |
| 3 | 15 | 90 | Zircon | 10 | 50 | 820 | Satisfactory |
| 3 | 15 | 90 | Zircon | 20 | 55 | 780 | Satisfactory |
| 3 | 15 | 90 | Zircon | 35 | 55 | 755 | Satisfactory |
| 3 | 15 | 90 | Zircon | 50 | 60 | 740 | Satisfactory |
| 3 | 15 | 90 | Zircon | 60 | 60 | 520 | Output is reduced |
| 3 | 15 | 90 | Zircon | 15 | 13 | 586 | Output is reduced |
| 3 | 15 | 90 | Zircon | 15 | 20 | 735 | Satisfactory |
| 3 | 15 | 90 | Zircon | 15 | 30 | 762 | Satisfactory |
| 3 | 15 | 90 | Zircon | 15 | 55 | 802 | Satisfactory |
| 3 | 15 | 90 | Zircon | 25 | 60 | 780 | Satisfactory |
| 3 | 15 | 90 | Zircon | 25 | 70 | 795 | Satisfactory |
| 3 | 15 | 90 | Zircon | 25 | 75 | – | Effect of correcting warp is small |

EP 1 919 021 B1

# FIG.8

# FIG.9

# FIG.10

# FIG.11

# FIG.12

# FIG.13

FIG.14

# FIG.15

# FIG.16

# FIG.17

# FIG.18

| Thickness of electrolyte layer | Thickness of air electrode layer | Thickness of fuel electrode layer | Porous layer | | | Cell output | Result |
|---|---|---|---|---|---|---|---|
| | | | Material | Thickness | Porosity | | |
| um | um | um | | um | % | mW/cm$^2$ | |
| 30 | 15 | 15 | Magnesia | 10 | 40 | – | Evaluation is impossible since warp is great |
| 30 | 15 | 15 | Magnesia | 20 | 40 | 390 | Satisfactory |
| 30 | 15 | 15 | Magnesia | 30 | 50 | 385 | Satisfactory |
| 30 | 15 | 15 | Magnesia | 35 | 35 | 370 | Satisfactory |
| 30 | 15 | 15 | Magnesia | 40 | 40 | 320 | Satisfactory |
| 30 | 15 | 15 | Magnesia | 50 | 35 | 230 | Output is reduced |
| 30 | 15 | 15 | Magnesia | 30 | 15 | 245 | Output is reduced |
| 30 | 15 | 15 | Magnesia | 30 | 20 | 360 | Satisfactory |
| 30 | 15 | 15 | Magnesia | 30 | 45 | 332 | Satisfactory |
| 30 | 15 | 15 | Magnesia | 30 | 60 | 356 | Satisfactory |
| 30 | 15 | 15 | Magnesia | 30 | 70 | 326 | Satisfactory |
| 30 | 15 | 15 | Magnesia | 30 | 75 | – | Effect of correcting warp is small |

# FIG.19

| Thickness of electrolyte layer | Thickness of air electrode layer | Thickness of fuel electrode layer | Porous layer | | | Cell output | Result |
|---|---|---|---|---|---|---|---|
| | | | Material | Thickness | Porosity | | |
| um | um | um | | um | % | mW/cm$^2$ | |
| 3 | 15 | 90 | Magnesia | 15 | 50 | – | Evaluation is impossible since warp is great |
| 3 | 15 | 90 | Magnesia | 20 | 50 | 730 | Satisfactory |
| 3 | 15 | 90 | Magnesia | 30 | 55 | 705 | Satisfactory |
| 3 | 15 | 90 | Magnesia | 35 | 60 | 710 | Satisfactory |
| 3 | 15 | 90 | Magnesia | 50 | 65 | 720 | Satisfactory |
| 3 | 15 | 90 | Magnesia | 60 | 65 | 556 | Output is reduced |
| 3 | 15 | 90 | Magnesia | 30 | 15 | 660 | Output is reduced |
| 3 | 15 | 90 | Magnesia | 30 | 20 | 675 | Satisfactory |
| 3 | 15 | 90 | Magnesia | 30 | 38 | 680 | Satisfactory |
| 3 | 15 | 90 | Magnesia | 30 | 55 | 715 | Satisfactory |
| 3 | 15 | 90 | Magnesia | 30 | 70 | 750 | Satisfactory |
| 3 | 15 | 90 | Magnesia | 30 | 77 | – | Effect of correcting warp is small |

EP 1 919 021 B1

# FIG.20

# FIG.21

# FIG.22

# FIG.23

# FIG.24

# FIG.25

# FIG.26

# FIG.27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006139966 A